(19) **Europäisches Patentamt / European Patent Office / Office européen des brevets**

(11) **EP 2 134 003 B1**

(12) **EUROPEAN PATENT SPECIFICATION**

(45) Date of publication and mention
of the grant of the patent:
**28.12.2011 Bulletin 2011/52**

(51) Int Cl.:
**H04B 7/04** (2006.01)

(21) Application number: **08010377.3**

(22) Date of filing: **06.06.2008**

(54) **A user selection apparatus and method for a mobile communication system**

Benutzerauswahlvorrichtung und -verfahren für ein mobiles Kommunikationssystem

Appareil et procédé de sélection d'utilisateur pour un système de communication mobile

(84) Designated Contracting States:
**DE FR GB IT SE**

(43) Date of publication of application:
**16.12.2009 Bulletin 2009/51**

(73) Proprietor: **NTT DoCoMo, Inc.**
**Chiyoda-Ku**
**Tokyo 100-6150 (JP)**

(72) Inventors:
• **Guthy, Christian**
**80803 München (DE)**
• **Utschick, Wolfgang**
**85051 Ingolstadt (DE)**
• **Dietl, Guido**
**80805 München (DE)**
• **Nossek, Josef A.**
**82393 Iffeldorf (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
**EP-A- 1 768 274     EP-A- 1 863 248**

• **ZUKANG SHEN ET AL: "Low complexity user selection algorithms for multiuser MIMO systems with block diagonalization" IEEE TRANSACTIONS ON SIGNAL PROCESSING,, vol. 54, no. 9, 1 September 2006 (2006-09-01), pages 3658-3663, XP002503418**

**Description**

The present invention is in the field of communication systems utilizing multiple-input-multiple-output (MIMO = multiple-input-multiple-output) radio channels.

Development in mobile communications constantly seeks for improvement of each user's data rate and system capacity in order to provide as many users as possible with high quality services. In a point to multipoint communication system, as for instance the downlink of a mobile communication system, a transmitter has the important task of assigning resources such as time, frequency and space components to the receivers under its coverage. If the transmitter knows the channel of each user, multiple users can be served at the same time and over the same frequency multiplexing them in space. In a multipoint to point communication system, as for example the uplink of a mobile communication system, this task has to be accomplished by the receiver.

In the following, analysis will be directed to the downlink, application to the uplink is straightforward. For this purpose multiple antennas at a base station or access point and at mobile users are employed which leads to the well-known Multiple-Input-Multiple-Output systems. Here a MIMO-system with $K$ users and with $M_{Tx}$ antennas at the transmitter and $M_{Rr,k}$ antennas at the $k$-th receiver is considered. The $k$-th user's channel is described by the matrix

$$H_k \in \mathbb{C}^{\ M_{Rr,k} \times M_{Tx}} \ .$$

Assuming perfect knowledge of these matrices at the transmitter a common optimization problem looked at is the maximization of sum capacity. The optimum solution to that problem can be found by iterative waterfilling, cf. in W. Yu, Sum-Capacity Computation for the Gaussian Vector Broadcast Channel, IEEE Transactions on Information Theory, 52:754-759, 2006, and in W. Yu, W. Rhee, S. Vishwanath, S. Jafar, and A. Goldsmith, Sum Power Iterative Waterfilling for Multi-antenna Gaussian Broadcast Channels, IEEE Transactions on Information Theory, 51:1570-1580, 2005.

As an efficient non-iterative approach to this problem the Successive Encoding Successive Allocation Method (SESAM = Successive Encoding Successive Allocation Method) has been proposed in P. Tejera, W. Utschick, G. Bauch, and J. A. Nossek, Subchannel Allocation in Multiuser Multiple Input Multiple Output Systems, IEEE Transactions on Information Theory, 52:4721-4733, Oct. 2006, which is able to achieve the optimum solution very closely. Both algorithms rely on the principle of Dirty Paper Coding (DPC = Dirty Paper Coding) M.H.M. Costa, Writing on Dirty Paper, IEEE Transactions on Information Theory, 29:439-441, May 1983, which states that interference that is known when a certain data stream is encoded can be perfectly canceled and the maximum achievable rate of this stream is the same as if that interference was not present. The practical implementation of nearly optimum DPC, however, is numerically involved.

Furthermore the complexity of both algorithms linearly scales with the number of users, although the number of users actually served is usually smaller or equal to the number of transmit antennas. For this reason several user selection algorithms have been proposed which select a subset of users based on a simple criterion with which the corresponding algorithms are executed. For the optimum approach a user pre-selection method is presented in G. Aniba and S. Aissa, Multi-User Capacity Maximization for MIMO Gaussian Broadcast Channels, In Proc. of International Conference on Communications (ICC), 2006, which relies on the Singular Value Decomposition (SVD = Singular Value Decomposition) of the composed channel matrix and is therefore rather complicated as well. The composed channel matrix $H$ contains the channel matrices of all users stacked row-wise in one matrix. In case of 3 users for example, the composed channel matrix is given by

$$H = \begin{bmatrix} H_1 \\ H_2 \\ H_3 \end{bmatrix}.$$

Correspondingly a lot of research has been conducted regarding user selection, when only linear approaches such as Block Diagonalization or Zero-Forcing Beamforming (ZFBF = Zero-Forcing Beamforming) are used for the maximization of sum rate, cf.

Q.H. Spencer, A.L. Swindlehurst, and M. Haardt, Zero-forcing Methods for Downlink Spatial Multiplexing in Multiuser MIMO Channels, IEEE Trans. on Signal Processing, 52(2):461-471, February 2004, and

G. Caire and S. Shamai, On the Achievable Throughput of Multiantenna Gaussian Broadcast Channel, IEEE Transactions on Information Theory, 49 (7) : 1691-1706, July 2003.

G. Dimic and N.D. Sidoropoulos, On Downlink Beamforming with Greedy User Selection, IEEE Transactions on Signal Processing, 53(10):3857-3868, October 2005, discuss the problem of simultaneous multi user downlink beam forming, also called spatial interference cancellation. The authors employ a transmit antenna array to create multiple antenna beams directed towards the individual users, where they seek to increase the throughput measured by a sum capacity or a sum rate. The sum capacity or sum rate is determined by accumulating the individual user capacities depending on the individual user antenna diagrams and the corresponding cross interference introduced therewith. The authors investigate the case of having more users than transmit antennas, which requires user selection. Optimal solutions to this problem can be prohibitively complex for online implementation at the base station. Other solutions may capitalize on multi user diversity to achieve a significant fraction of sum capacity at a lower complexity cost. The authors analyzed the throughput performance in Rayleigh fading of a sub-optimal greedy pre-coding based scheme and propose a user selection method based on simple zero-forcing beam forming.

Further details can be found in J. Wang, D.J. Love, and M. Zoltowski, User Selection for the MIMO Broadcast Channel with a Fairness Constraint, In Proc. of IEEE International Conference on Acoustics, Speech, and Signal Processing (ICASSP), 2007, and further approaches for zero forcing are disclosed in

T. Yoo and A. Goldsmith, On the Optimality of Multiantenna Broadcast Scheduling Using Zero-Forcing Beamforming, IEEE Journal on Selected Areas in Communications, 24(3):528-541, March 2006,

T. Yoo and A. Goldsmith, Sum-Rate Optimal Multi-Antenna Downlink Beamforming Strategy Based on Clique Search, In Proc. of Global Telecommunications Conference (GLOBECOM), 2005.

Z. Shen, R. Chen, J.G. Andrews, R.W. Heath, and B.L. Evans, Low Complexity User Selection Algorithms for Multiuser MIMO Systems with Block Diagonalization, IEEE Transactions on Signal Processing, 54(9):3658 - 3663, September 2006, disclose a pre-coding technique called block diagonalization that eliminates inter-user interference in downlink multi user multiple-input multiple-output systems. The authors assume that all users have the same number of receive antennas and utilize all receive antennas when scheduled for transmission. The number of simultaneously supportable users with block diagonalization is limited by the ratio of the number of base station transmit antennas to the number of user receive antennas. In a downlink MIMO system with a large number of users, the base station may select a subset of users to serve in order to maximize the total throughput. A brute-force search for the optimal user set, however, is computationally prohibitive. The authors propose two low complexity sub-optimal user selection algorithms for multi-user MIMO systems with block diagonalization. Both algorithms try to select a subset of users such that a total throughput is nearly maximized. The total throughput is evaluated by accumulating the individual user capacities or throughput. A first method greedily maximizes the total throughput, whereas the second criteria is based on channel energy. Both algorithms disclosed use linear complexity and a total number of users and achieve around 95% of the total throughput of the complete search method in simulations.

Further details and further user selection approaches can also be found in M. Fuchs, G. Del Galdo, and M. Haardt, Low-Complexity Space - Time - Frequency Scheduling for MIMO Systems With SDMA, IEEE Transactions on Vehicular Technology, 56:2775 - 2784, September 2007,

Q.H. Spencer and A.L. Swindlehurst, Channel Allocation in Multi-user MIMO Wireless Communications Systems, In Proc. of International Conference on Communications (ICC), 2004, and

T.F. Maciel and A. Klein, A Convex Quadratic SDMA Grouping Algorithm Based on Spatial Correlation, In Proc. of International Conference on Communications (ICC), 2007.

For user grouping methods the difference in maximum sum rate between an SDMA (SDMA = Space Division Multiple Access) based approach employing DPC (DPC = Dirty Paper Precoding) and TDMA (TDMA = Time Division Multiple Access) can be considered. Subsuming users to be selected in a set S, a user selection criterion reads as

$$\max_S \left[ \sum_{k \in S} R_{k,DPC} - \max_{k \in S} R_{k,su} \right] = \max_S g(S) \qquad (1.1)$$

$$s.t. |S| = N,$$

whereas the cardinality of $S$ must be equal to a predefined value $N$ and $R_{k,DPC}$ denote the rates of user $k$ achievable with DPC. The maximum sum.rate for TDMA is equal to the maximum single-user rate $R_{k,su}$, which is the rate a user can achieve if it receives all system resources.

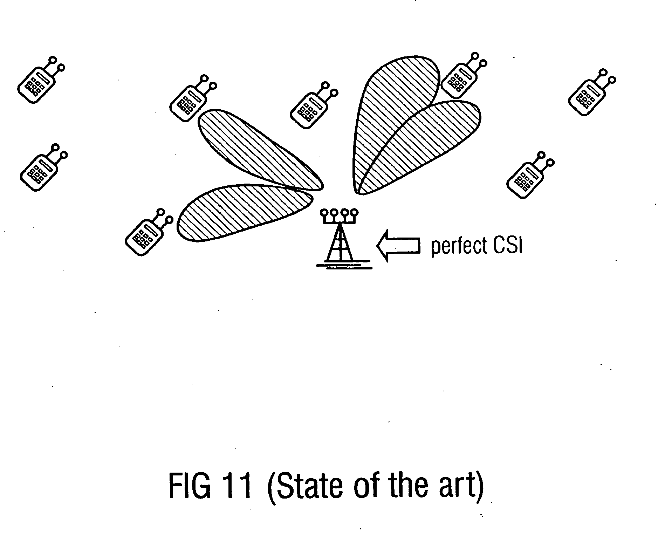

Fig. 11 shows a state of the art scenario, where multiple antennas are operated at a base station and a plurality of mobile terminals are in the field. It can be seen that the terminals which are in the field may also utilize multiple antennas, establishing a MIMO radio channel. In the following it is assumed that perfect channel knowledge is given at, for example, a base station as well as at a mobile terminal. This is shown in Fig. 11 by the arrow indicating that perfect CSI (CSI = Channel State Information) is available.

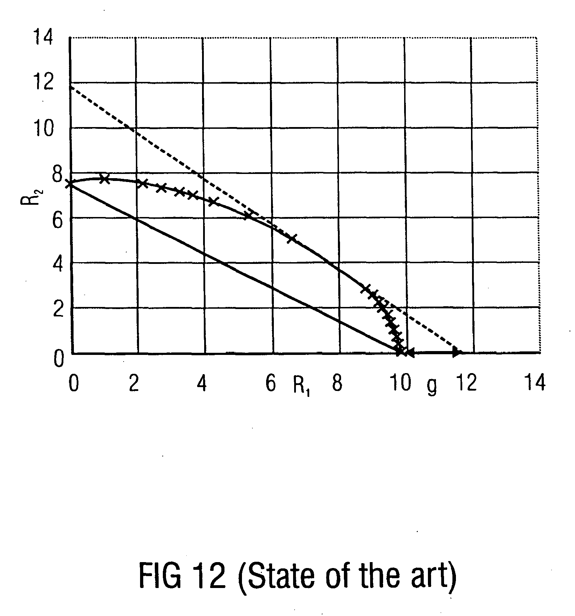

Fig. 12 shows a visualization of an applied objective function g(S) for a two user scenario. The supportable rate of user 1 is given on the abscissa and the supportable data rate of user 2 is given on the ordinate. From Fig. 12 it can be seen that user 1 can support a rate of 10 when utilizing all resources by itself, respectively user 2 may achieve a maximum data rate of 8 for the same case. Note that no units are given in Fig. 12 with respect to the user data rates, as the numbers here only serve as qualitative measures, which also holds for the remainder.

Fig. 12 exhibits the objective function graphically for a sample scenario with two users. The dashed line has a slope of -1. As it touches the capacity region at the point of maximum sum rate, the value for the sum rate can be read off at the points of intersection with the axes. For simplicity reasons, but not meant to be limiting, considerations to single carrier systems are considered in the following.

However, from the intersection point of the sum capacity in the view graph with the dashed line, it is obvious that the sum capacity of the system, i.e., when serving both users at the same time on the same frequency utilizing spatial channel separation, is higher than the supportable data rate of the individual users.

The publication "Low Complexity User Selection Algorithm for Multiuser MIMO Systems With Block Diagonalization", IEEE Transactions on Signal Proessing, Vol. 54, No. 9, September 2006, pages 3658-3663, Z. Shen et al., discloses block diagonalization as a precoding technique that eliminates interuser interference in downlink multiuser multiple-input multiple-output (MIMO) systems. With the assumptions that all users have the same number of receive antennas and utilize all receive antennas when scheduled for transmission, the number of simultaneously supportable users with block diagonalization is limited to the ratio of the number of base station transmit antennas to the number of user receive antennas. A first low-complexity suboptimal user selection algorithm greedily maximizes the total throughput, whereas a criterion of a second algorithm is based on the channel energy.

It is the object of the present invention to provide a concept for user selection in a mobile communication system which achieves improved results in terms of sum capacity, while having moderate complexity.

The object is achieved by a user selection apparatus according to claim 1 and a method for selecting a subgroup of users according to claim 16.

The present invention is based on the finding that spatial compatibility of users can be verified on a less complex basis than it is done for example by rather complex MIMO algorithms, for example carrying out singular value decompositions. It is a further finding of the present invention that MIMO user or sub-channel selection and assignment algorithms, which are theoretically optimized, are not practical, since their computational complexity is prohibitive. Embodiments of the present invention may allow to reduce a large number of users, i.e., a plurality of users to a lower number of users, namely an intermediate selection group of users, for which the computational complexity of user or sub-channel assignment MIMO algorithms is computationally feasible. Thereby, embodiments may choose an intermediate selection group from the plurality of users, where the users within the intermediate selection group are spatially compatible, i.e., users in the intermediate selection group enable high performance for the system, which carries out a rather complex MIMO sub-channel or user selection method on the intermediate selection group.

It is a further finding of the present invention that the spatial compatibility of a group of users can be evaluated by a combined transmission capacity measure which takes into account a combined transmission capacity for a combination of users. Some embodiments may carry out a brute-force method, i.e. evaluating all permutations, for example all combinations of users, from a plurality of users by determining combined transmission capacity measures for all permutations or user combinations and by selecting a subset of users for an intermediate selection group by choosing the user combination e.g. having the highest combined transmission capacity measure.

It is a further finding of the present invention that the spatial compatibility of users can be evaluated in terms of their MIMO radio channel matrices representing their MIMO radio channels. For a certain combination of users, the combined transmission capacity measure may in embodiments be based on a determinant of an accumulated matrix, accumulating channel energy matrices of the combination of users.

In other words, if a MIMO radio channel matrix of a user is known, a channel energy matrix can be determined by multiplying the complex conjugate transpose with the matrix itself. The result will deliver on the diagonal energies within the spatial sub-channels of the MIMO radio channel. The off-diagonal elements will determine a measure of the cross coupling or cross talk between said channels. The determinant of such a matrix will provide a measure determining the relation between channel energy and cross talk between the sub-channels. When accumulating multiple such matrices, for example by simple addition, the determinant will provide a measure on the energy in the combined sub-channels in relation to the cross talk of the combined sub-channels. In other words, when accumulating said channel energy matrices for a combination of users, the determinant of said matrix may provide a measure on their spatial compatibility, i.e., the relation of energy in the sub-channels and the cross-talk involved, also being a measure on the spatial separability of the multiple spatial sub-channels in the combined MIMO radio channel.

The embodiments utilize a combined transmission capacity measure in terms of evaluating accumulated energy matrices of combinations of users. Embodiments therewith provide the advantage that the spatial compatibility can be evaluated in a less complex manner than, for example, with conventional concepts utilizing singular value or Eigen value decompositions and projections of individual users' MIMO radio channel matrices. By choosing a combination of users, which have a good or even the highest spatial compatibility, high capacity can be achieved by carrying out a more complex MIMO sub-channel or user selection algorithms on the basis of said combination, i.e., on the basis of the intermediate selection group with a reduced number of users compared to the number of available users.

It is another finding of the present invention that high capacity, for a given limited complexity, can also be achieved if MIMO sub-channel and assignment methods are carried out on a group of users, which are balanced with respect to their channel energies or individual data rates. In other words, for a given limited complexity, even though a user may have a much higher individual capacity or data rate than other users, it may be beneficial to de-select the high capacity user and not simultaneously serve the high capacity user with the other users. Serving a group of users, in which channel gains are balanced, may result in a higher overall or total capacity, than having one outstanding user. Embodiments may therefore carry out a pre-selection, reducing the plurality of users to a pre-selection group of users in which users have balanced channel gains, channel energies, individual data rates or individual capacities.

Embodiments may, in a following phase, further reduce the pre-selection group of users to an intermediate selection group on which finally a computationally more complex MIMO sub-channel or user selection scheme can be based. In other words, embodiments may carry out a three phase selection process reducing a plurality of users to a pre-selection group of users by choosing a sub-set of users having balanced channel energies in a first phase, secondly further reducing the pre-selection group to an intermediate selection group by selecting from the pre-selection group a subset of users, which is spatially compatible, and thirdly running a complex MIMO sub-channel assignment or user selection scheme on the intermediate selection group. The number of users in the intermediate selection group may be reduced to a point, where computationally complex MIMO sub-channel assignment and user selection algorithms become feasible.

The present invention is based on the finding that in a MIMO scenario, user selection for achieving high system throughput, can be carried out with less complexity when selection is performed first. The selection can utilize a much simpler criterion, involving less complexity as, for example, sophisticated algorithms as SESAM etc. For example, user pre-selection, i.e., the reduction of the group of all users to a smaller intermediate selection group to choose a sub-group for transmission from, maybe based on channel gains or channel capacities of the individual users, for which it is not necessary to carry out complex operations as, for example, a singular value decomposition (SVD = Singular Value Decomposition) or an Eigenvalue analysis or decomposition, respectively.

It is a further finding of the present invention that a pre-selection group, which is smaller than the group of all users, can be determined based on simple criteria, without jeopardizing the system throughput. Moreover, pre-selection may be carried out on the basis of multiple criteria, where the determination of the sub-group for transmission from the pre-selection group may utilize a more sophisticated algorithm, for example, taking into account spatial properties of the users of the pre-selection group.

While the existing user grouping approaches aim at identifying users which lead to a maximum sum rate, embodiments may carry out a user grouping aiming at the maximum gain obtainable by spatially multiplexing several users. Therefore users selected for transmission may be served by iterative waterfilling, SESAM or similar approaches such that e.g. the difference between the maximum sum rate and the maximum rate one of the selected users could achieve with the totally available transmit power or transmission resources becomes a maximum.

Embodiments with such a selection rule can be motivated as follows. The sum capacity achieving or approaching algorithms imply a large computational complexity, especially as they employ DPC. In many practical scenarios one can therefore not afford to serve all users by these algorithms. Nevertheless in embodiments, for some users employing these algorithms may remain still affordable, while the other users are separated by simpler approaches as Time Division Multiple Access. In embodiments the extra effort invested in the more complicated algorithms should therefore lead to an optimized, in some cases even maximum gain in sum rate compared to a scenario where only one user is served at the same time on the same frequency.

Embodiments of the present invention comprise a user selection method aiming at identifying the users which lead to the maximum or optimized increase in sum rate compared to TDMA when spatial multiplexing algorithms for example employing Dirty Paper Coding are applied. Embodiments may carry out three phases. In phase I simple selection criteria may be applied to sort out some users to determine a pre-selection group having a certain balance in channel gain among its users. Phase II may apply more sophisticated selection rules to find an intermediate selection group of users within the users remaining after phase I, having users which are balanced with respect to their channel gains and spatially compatible. In embodiments, e.g. depending on the effort one is willing to spend, each phase can be applied on its own as well. In a third phase for example SESAM can be applied to the users in the intermediate selection group.

Embodiments provide the advantage that they may ideally lead to a maximum, they may provide gain in sum rate under given computational constraints. Embodiments may enable a scaled complexity.

In the following, more detailed embodiments will be described using the accompanying figures, in which

Fig. 1a shows an embodiment of a user selection apparatus;

Fig. 1b shows an embodiment of a selector;

Fig. 1c shows another embodiment of a selector;

Fig. 1d shows an embodiment of a user selection apparatus using a pre-selector;

Fig. 2a shows an embodiment of a method for user selection;

Fig. 2b shows an embodiment of a method for pre-selection;

Fig. 2c shows an embodiment of a method for selection;

Fig. 3a shows a view graph illustrating the sum capacity for a scenario with two users having large channel gains;

Fig. 3b shows a view graph illustrating the sum capacity for a scenario with two users having a small channel gain;

Fig. 4a shows a view graph illustrating the sum capacity for a scenario with two users having strong spatial separation;

Fig. 4b shows a view graph illustrating the sum capacity for a scenario with two users having no spatial separation;

Fig. 5a shows a view graph illustrating the sum capacity for a scenario with two users having balanced channels;

Fig. 5b shows a view graph illustrating the sum capacity for a scenario with two users having unbalanced channels;

Fig. 6a shows a view graph illustrating simulation results on the average sum capacity for a two user scenario;

Fig. 6b shows a view graph illustrating simulation results on the average sum capacity in a four user scenario;

Fig. 7 shows a simulation scenario;

Fig. 8 shows a view graph illustrating simulation results for the average gain;

Fig. 9 shows another simulation scenario;

Fig. 10 shows a view graph illustrating simulation results on the average gain;

Fig. 11 shows a state of the art MIMO scenario; and

Fig. 12 shows a view graph illustrating the sum capacity in a conventional two user scenario.

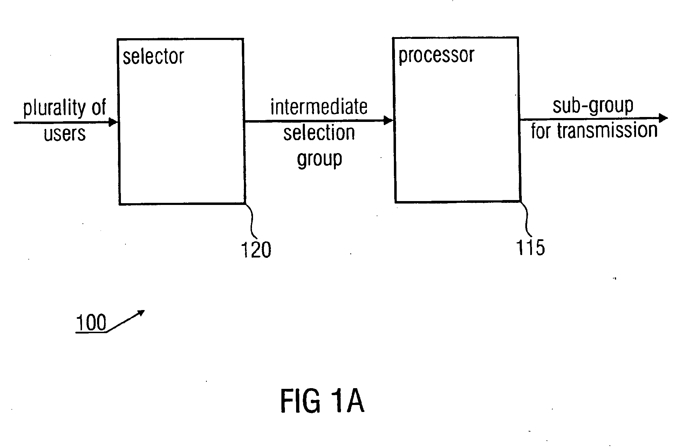

In the following an embodiment will be described in detail. Fig. 1a shows a user selection apparatus 100 for being operative in a mobile communication system and for selecting a sub-group of users from a plurality of users for transmission, a user being adapted for communicating through a multiple-input-multiple-output (MIMO = Multiple-Input-Multiple-Output) radio channel. The user selection apparatus 100 comprises a selector 120 for selecting users from the plurality of users for an intermediate selection group $S$ of users $k$ based on a spatial compatibility of the MIMO radio channels of the users of the plurality of users. The user selection apparatus further comprises a processor 115 for determining the sub-group of users for transmission based on the MIMO radio channels.

In embodiments the selector 120 can be adapted for selecting users from the plurality of users for the intermediate selection group $S$ of users $k$ wherein the spatial compatibility corresponds to a combined transmission capacity measure $C_{sum}(S)$ of the users of the intermediate selection group $S$.

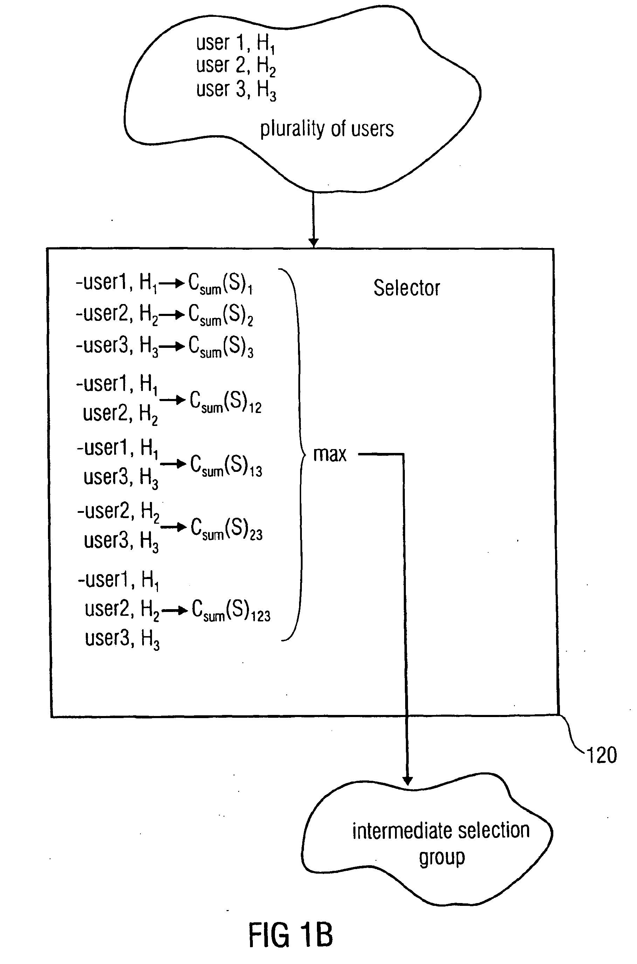

Fig. 1b illustrates an embodiment of a selector 120 wherein the plurality of users comprises for example three users, user 1, user 2 and user 3. The selector 120 can be adapted for selecting from the plurality of users, i.e. from the first user having a MIMO radio channel $H$, the second user having a MIMO radio channel $H_2$ and the third user having a MIMO radio channel $H_3$. The selector 120 can be adapted for evaluating a first combined transmission capacity measure $C_{sum}(S)_1$ based on $H_1$ a second combined transmission capacity measure $C_{sum}(S)_2$ based on $H_2$, a third combined transmission capacity measure $C_{sum}(S)_3$ based on $H_3$, a fourth combined transmission capacity measure $C_{sum}(S)_{12}$ based on $H_1$ and $H_2$, a fifth combined transmission capacity measure $C_{sum}(S)_{13}$ based on $H_1$ and $H_3$, a sixth combined transmission capacity measure $C_{sum}(S)_{23}$ based on $H_2$ and $H_3$ and a seventh combined transmission capacity measure $C_{sum}(S)_{123}$ based on $H_1$, $H_2$ and $H_3$. The selector 120 can be adapted for selecting for the intermediate selection group $S$ the combination of users with the highest combined transmission capacity measure.

In embodiments the combined transmission capacity measure of an intermediate selection group $S$ with users $k$ can be based on a determinant

$$\left| \sum_{k \in S} H_k^H H_k \right| .$$

The determinant may be used in embodiments to determine a spatial compatibility of a combination of users. The value of the above determinant will increase the stronger the diagonal elements of the sum matrix or energy matrix

$$\sum_{k \in S} H_k^H H_k$$

are. In other words the determinant may used as a measure for spatial compatibility in embodiments. The determinant can represent a relation between diagonal elements and off-diagonal elements of the above accumulated energy matrix or combined MIMO radio channel matrix of a combination of users in $S$. The determinant may provide a measure on how separable the spatial sub-channels are within the above combined MIMO channel matrix, yielding a higher value, the stronger the individual spatial sub-channels are, which is represented by the diagonal elements, with respect to cross coupling in $S$, represented by off-diagonal elements.

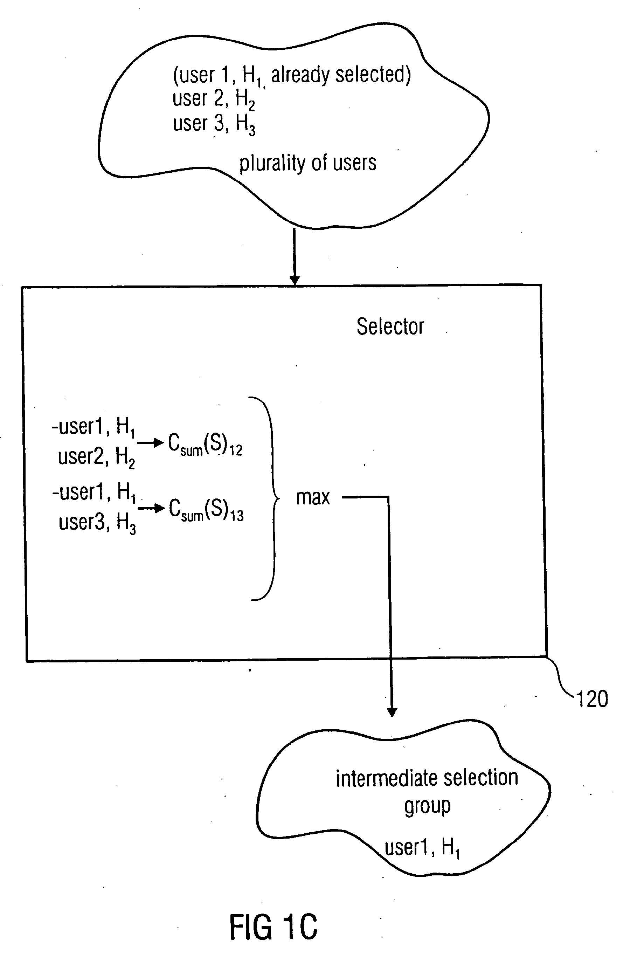

Fig. 1c illustrates another embodiment, in which the selector 120 can be adapted for evaluating a first combined transmission capacity measure $C_{sum}(S)_{12}$ of a first user of the intermediate selection group and a second non-selected user, and for evaluating a second combined transmission capacity measure $C_{sum}(S)_{13}$ of the first user of the intermediate selection group and a third non-selected user, and for selecting the second user for the intermediate selection group if the first combined transmission capacity measure $C_{sum}(S)_{12}$ is higher than the second combined transmission capacity measure $C_{sum}(S)_{13}$ and for selecting the third user for the intermediate selection group otherwise.

In further embodiments the selector 120 can be adapted for selecting for the intermediate selection group a user from the plurality of users resulting in an intermediate selection group of users having a higher combined transmission capacity measure than a user with the highest transmission capacity measure from the plurality of users. In other words the selector 120 may be adapted for selecting for the intermediate selection group only users, if the transmission capacity measure or a supportable data rate by the intermediate selection group is higher than the highest data rate of all users from the plurality of users. Multiple users may only be selected if an overall improvement, i.e. in system capacity or sum rate, is achieved.

The selector 120 may be further adapted for selecting for the intermediate selection group $S$ users from the plurality of users $\check{S}$ for which a combined transmission capacity measure in terms of a sum capacity $C_{sum}(S)$, according to

$$\lim_{P_{Tx} \to \infty} C_{sum}(S) = \log_2 \left| I + \sum_{k \in S} H_k^H H_k \frac{P_{Tx}}{M_{Rx,k} N} \right|$$

$$\text{with } \sum_{k \in S} M_{Rx,k} \leq M_{Tx}$$

or an estimated sum capacity $C_{sum}(S)$ according to

$$\lim_{P_{Tx} \to \infty} C_{sum}(S) \approx \log_2 \left| I + \sum_{k \in S} H_k^H H_k \frac{P_{Tx}}{M_{Rx,k} N} \right|$$

with

$$\sum_{k \in S} M_{Rx,k} > M_{Tx} \, ,$$

or

$$C_{sum}(S) \approx \log_2 \left| \boldsymbol{I} + \sum_{k \in S} \boldsymbol{H}_k^H \boldsymbol{H}_k \frac{P_{Tx}}{M_{Rx,k} N} \right| \quad \text{for} \quad P_{Tx} < \infty \, ,$$

is optimized or maximized, where $M_{Rx,k}$ denotes a number of receive antennas of a user $k$, $P_{Tx}$ is a transmit power, $\boldsymbol{H}_k$ represents a MIMO radio channel matrix of user $k$ , $\boldsymbol{I}$ is an identity matrix, $N$ represents the cardinality of $S$ and $M_{Tx}$ denotes a number of transmit antennas used for transmission.

The selector 120 can be adapted for selecting a user $\pi(1)$ for the intermediate selection group $S$ having a MIMO radio channel represented by a MIMO radio channel matrix $\boldsymbol{H}_{\pi(1)}$ having a highest Frobenius norm of the users of the plurality of users $\hat{S}$ according to

$$\pi(1) = \arg \max_{k \in \hat{S}} \left\| \boldsymbol{H}_k \right\|_F \, .$$

The selector 120 may then be adapted for adding a user $\pi(i)$ from non-selected users $k$ to the intermediate selection group $S$ for which the increase in sum capacity or estimated sum capacity $\Delta C_{sum}(S \cup k)$ is the strongest, according to

$$\pi(i) = \arg \max_{k \in \hat{S} \backslash S} \Delta C_{sum}(S \cup k) \, ,$$

whereas

$$\Delta C_{sum}(S \cup k) = C_{sum}(S \cup k) - C_{sum}(S) \, ,$$

and the sum capacity $C_{sum}(S)$ is determined according to

$$\lim_{P_{Tx} \to \infty} C_{sum}(S) = \log_2 \left| \boldsymbol{I} + \sum_{k \in S} \boldsymbol{H}_k^H \boldsymbol{H}_k \frac{P_{Tx}}{M_{Rx,k} N} \right|$$

with

$$\sum_{k \in S} M_{Rx,k} \leq M_{Tx}$$

or an estimated sum capacity $C_{sum}(S)$ according to

$$\lim_{P_{Tx} \to \infty} C_{sum}(S) \approx \log_2 \left| \boldsymbol{I} + \sum_{k \in S} \boldsymbol{H}_k^H \boldsymbol{H}_k \frac{P_{Tx}}{M_{Rx,k} N} \right|$$

with

$$\sum_{k \in S} M_{Rx,k} > M_{Tx} \, ,$$

or

$$C_{sum}(S) \approx \log_2 \left| \boldsymbol{I} + \sum_{k \in S} \boldsymbol{H}_k^H \boldsymbol{H}_k \frac{P_{Tx}}{M_{Rx,k} N} \right| \quad \text{for} \quad P_{Tx} < \infty \, ,$$

where $M_{Rx,k}$ denotes a number of receive antennas of user $k$, $P_{Tx}$ is the transmit power, $\boldsymbol{H}_k$ represents the MIMO radio channel matrix of user $k$, $\boldsymbol{I}$ is an identity matrix, $N$ represents the cardinality of $S$ and $M_{Tx}$ denotes a number of transmit antennas used for transmission.

In embodiments the processor 115 can be adapted for processing the MIMO radio channels of the users of the intermediate group of users to obtain processed MIMO radio channels and for determining the sub-group of users for transmission based on a spatial property of the processed MIMO radio channels of the users of the intermediate selection group. The processor 115 may determine users from the intermediate selection group for the sub-group based on a singular value decomposition of the MIMO radio channels of the users of the intermediate selection group. The processor 115 can be adapted for determining users from the intermediate selection group for the sub-group based on SESAM (SESAM = Successive Encoding Successive Allocation Method).

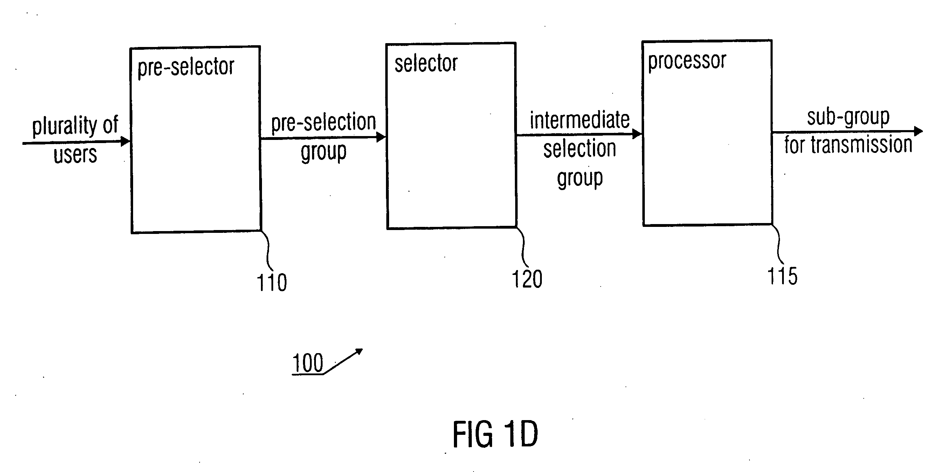

Fig. 1d depicts a further embodiment, wherein the user selection apparatus 100 may further comprise a pre-selector 110 for de-selecting a user having a transmission capacity measure which is higher than a transmission capacity measure of another user by a predetermined amount to obtain a pre-selection group not including the de-selected user. The selector 120 can be adapted for selecting users for the intermediate selection group from the pre-selection group. In other words embodiments may comprise threes phases. In a first phase the pre-selector 110 selects from a plurality of users a subset of users, i.e. the pre-selection group, based on their transmission capacity measures, e.g. in order to achieve a certain balance across the transmission capacity measures of the users within the pre-selection group. In a second phase the intermediate selection group is selected from the pre-selection group by the selector 120. The selector 120 may take spatial properties of the users' MIMO radio channels into account to select from the pre-selection group a subset of users for the intermediate selection group, wherein the users of the intermediates selection group may have a certain spatial compatibility.

The pre-selector 110 can be adapted for determining a transmission capacity measure in terms of an achievable data rate on a user's MIMO radio channel. Furthermore, the pre-selector 110 may be adapted for determining the transmission capacity measure in terms of a highest achievable data rate of a user's spatial sub-channel of the MIMO radio channel. The pre-selector 110 can be adapted for determining a transmission capacity measure in terms of evaluating a singular value decomposition of a user's MIMO radio channel matrix representing the user's MIMO radio channel. The pre-selector 110 may be adapted for determining the transmission capacity measure in terms of the highest singular value of a user's MIMO radio channel matrix. In other embodiments the pre-selector 110 may be adapted for determining the transmission capacity measure in terms of a Frobenius norm of a user's MIMO radio channel matrix.

The pre-selector 110 can be adapted for sorting the users according to their transmission capacity measures. The pre-selector 110 may be further adapted for comparing a user's transmission capacity measure to another user's transmission capacity measure, the other user having the next lower or the next higher transmission capacity measure within the plurality of users. Different thresholds may be used in dependence on whether the users are sorted in ascending or descending order. In embodiments the pre-selector 110 can be adapted for iterating through the sorted users evaluating a quotient of the user's transmission capacity measure and the other user's transmission capacity measure with the next lower or the next higher transmission capacity measure against the threshold, de-selecting the user from the pre-selection group for which the quotient exceeds the threshold if the other user's transmission capacity measure is the next lower transmission capacity measure or de-selecting the user from the pre-selection group for which the quotient is below the threshold if the other user's transmission capacity measure is the next higher transmission capacity measure.

The pre-selector 110 may be adapted for determining a pre-selection group having a pre-determined number of users. The pre-selector 110 can determine the users of the pre-selection group by selecting from the plurality of users a predetermined number of users having a limited difference in their transmission capacity measures on their MIMO radio channels and having the highest transmission capacity measures with limited differences within the plurality of users. In other words the pre-selector 110 may select from the plurality of users a pre-selection group of a pre-determined size or cardinality, respectively. Within the pre-selection group users have a limited difference in their transmission capacity measures on their MIMO radio channels, i.e. users have balanced transmission capacity measures, at least to a certain extend, within the pre-selection group. From the plurality of users the pre-selector 110 may select the users having the highest transmission capacity measures while fulfilling the aforementioned criteria.

The pre-selector 110 can be adapted for de-selecting a user with a highest transmission capacity measure on the MIMO radio channel if the difference between the highest transmission capacity measure and the second highest transmission capacity measure exceeds the pre-determined amount. The pre-determined amount can be absolute or relative. In one embodiment the pre-selector 110 may be adapted for de-selecting the user with the highest transmission capacity measure, if the highest transmission capacity measure is more than twice as high than the second highest transmission capacity measure. Embodiments may therewith achieve a balance of the channel gains of the users within the pre-selection group.

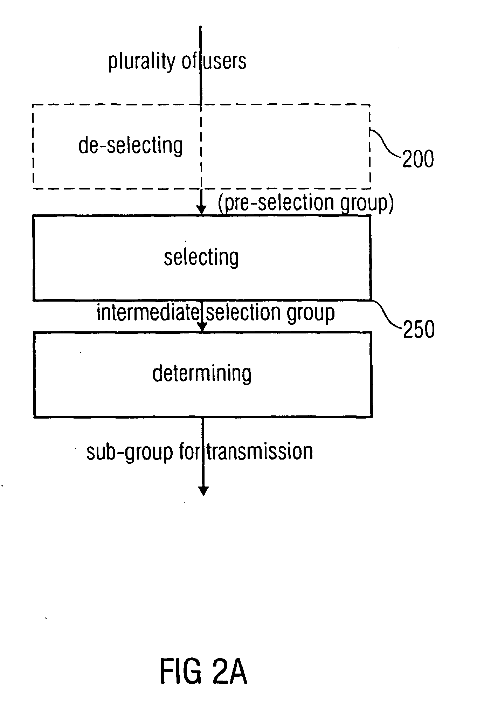

Fig. 2a shows a flow chart of an embodiment of a method for selecting a sub-group of users from a plurality of users for transmission in a mobile communication system, a user being adapted for communicating through a MIMO radio channel, comprising the steps of selecting 250 users from the plurality of users for an intermediate selection group S of users k based on a spatial compatibility of the MIMO radio channels of the users of the plurality of users and a step of determining the sub-group of users for transmission based on the MIMO radio channels.

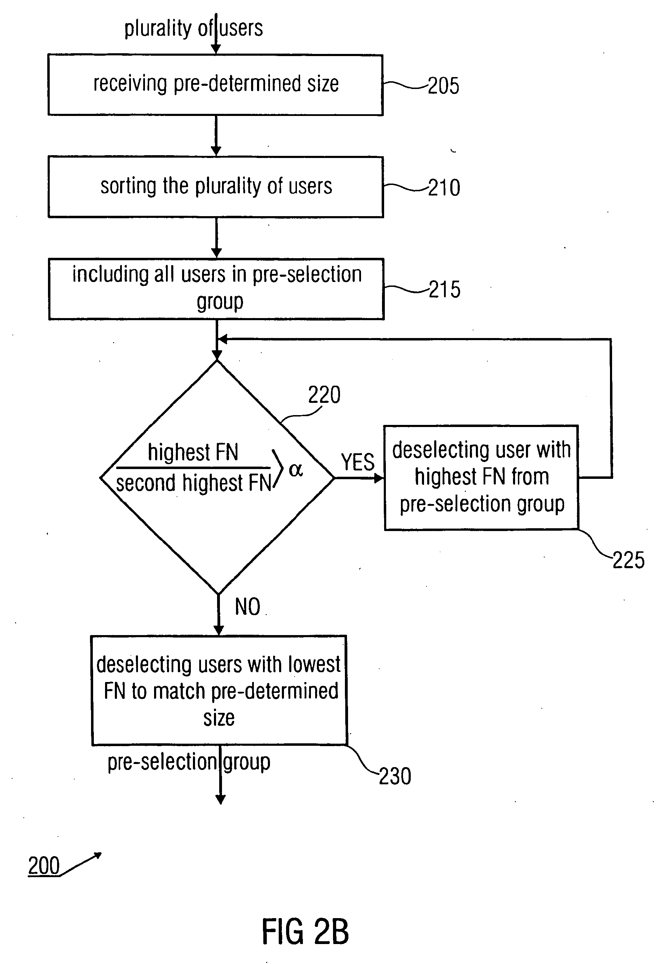

In an embodiment the method may further comprise an optional step of de-selecting 200 users from the plurality of users to obtain a pre-selection group and the step of selecting 250 users for the intermediate selection group can be based on the pre-selection group. According to the flowchart depicted in Fig. 2b the step of de-selecting 200 may comprise the steps of receiving 205 a pre-determined size of the pre-selection group and sorting 210 the plurality of users according to the Frobenius norms or single user rates of their MIMO radio channel matrices representing their MIMO radio channels in decreasing order. The method may further comprise a step of including 215 all users in the pre-selection group and comparing 220 the Frobenius norm or single user rate of the user with the highest Frobenius norm or the highest single user rate from the pre-selection group with the Frobenius norm or single user rate of the user having the second highest Frobenius norm or the second highest single user rate from the pre-selection group.

Moreover, the method may comprise steps of de-selecting 225 the user with the highest Frobenius norm or the highest single user rate from the pre-selection group and returning to the step of comparing 220 if the highest Frobenius norm or the highest single user rate is higher than a factor $\alpha$ multiplied by the second highest Frobenius norm or the second highest single user rate of the user from the pre-selection group and de-selecting 230 users with the lowest Frobenius norms or the lowest single user rates from the pre-selection group to match the pre-determined size.

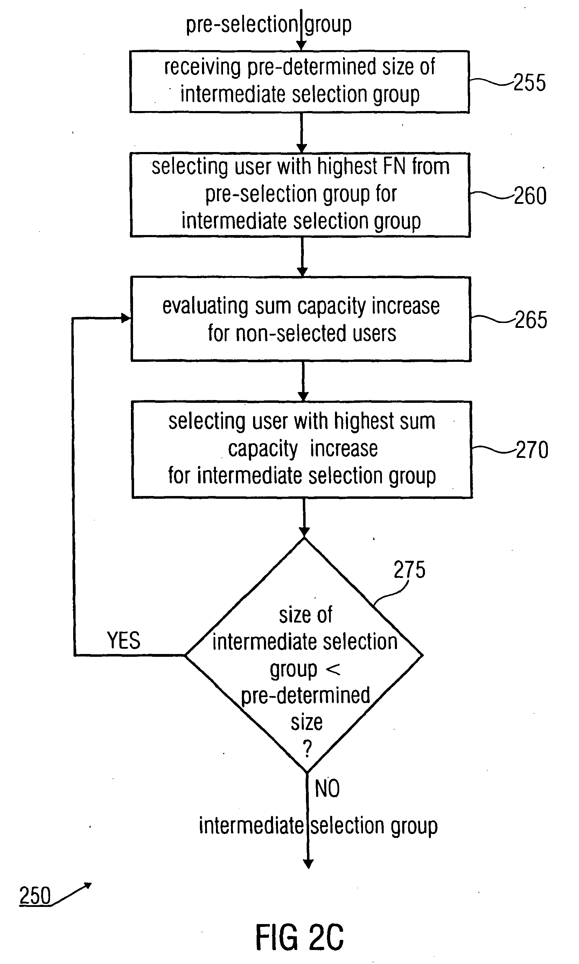

According to the illustration of the flowchart in Fig. 2c, in embodiments the step of selecting 250 may comprise the steps of receiving 255 a pre-determined size of the intermediate selection group and selecting 260 the user having the highest Frobenius norm or the highest single user rate from the pre-selection group. This user may be the one supporting the highest individual data rate, assuming that all resources were allocated only to this user. Starting out from this user, the second user which will be selected for the sub-group is chosen by evaluating a sum capacity or estimated sum capacity of the first user and all potential second users. Then, the combination of the first user and a second user may be chosen which yields the highest sum capacity. When choosing the third user for the sub-group, the first two chosen users may be combined with all potential third users and the sum capacity may be evaluated again, etc.

Furthermore, the embodiment may comprise a step of evaluating 265 a capacity or a sum rate increase for non-selected users in the pre-selection group on the basis of the selected users in the intermediate selection group and selecting 270 the user with the highest capacity or the highest sum rate increase for the intermediate selection group. The embodiment may comprise a step of returning to the step of evaluating 265 until the size of the intermediate selection group has reached the pre-determined size of the intermediate selection group.

The pre-selector 110 may be adapted for de-selecting a user with a highest transmission capacity measure on the MIMO radio channel if the difference between the highest transmission capacity measure and the second highest transmission capacity measure exceeds the pre-determined amount. In other words, the best user, i.e., the user with the highest transmission capacity measure, may not be selected for the pre-selection group and therewith not for transmission, because its transmission capacity measure is so much higher than the transmission capacity measure of a second highest user, i.e. the pre-selector 110 is adapted for selecting from the group of all users, a pre-selection group in a way, such that the balance between the users fulfils a certain requirement, i.e. the differences in the transmission capacity measures of the users in the pre-selection group undergo a certain limit.

Please note that other embodiments may utilize other transmission capacity measures, or sort the users in increasing order, or just choose from the users in different ways. The present embodiment is not to be interpreted limiting in any way.

An optimum solution of (1.1) may require an exhaustive search over all possible sets S. In a scenario with K

users that would require to search for the best set amongst $\binom{K}{N}$ possible sets. Clearly it is infeasible in practical systems and counteracts the desired aim of complexity reduction. Before explaining another embodiment in detail three factors that influence the objective function g($S$) shall be introduced. Although the following illustrations will address the case of $K$=2 users, the statements given hold for an arbitrary number of users.

Certainly in a group with users having large channel gains, the potential gains of spatial multiplexing of users is higher. By "channel gains" it is referred to a transmission capacity measure, e.g. to the Frobenius norms of the MIMO channel matrices $H_k$ representing the MIMO radio channels of a user $k$ , denoted by $\|H_k\|_F$, which indicate the overall energy of the channel, cf. Z. Shen, R. Chen, J.G. Andrews, R.W. Heath, and B.L. Evans, Low Complexity User Selection Algorithms for Multiuser MIMO Systems with Block Diagonalization, IEEE Transactions on Signal Processing, 54(9): 3658 - 3663, September 2006.

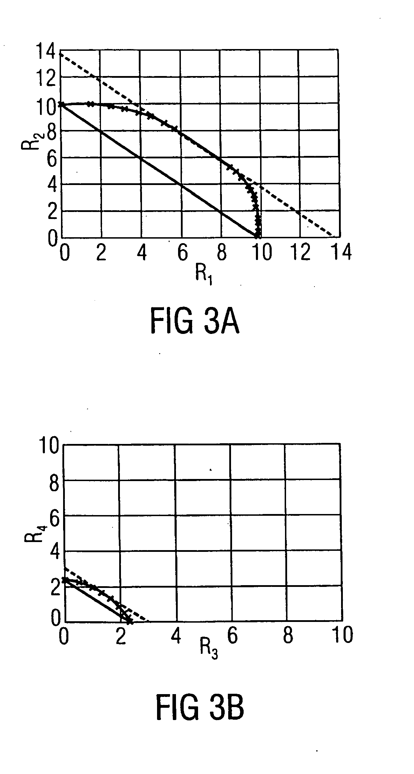

Alternatively in embodiments the single-user rates $R_{k,su}$, which are the maximum transmission rates one user can achieve, if it receives all transmission resources on its own, may serve as transmission capacity measure for the channel gains. Fig. 3a and Fig. 3b show two view graphs illustrating the sum capacity in a scenario involving two users. For Fig. 3a it is assumed that the two users both have large channel gains, i.e., high transmission capacity measures. For Fig. 3b it is assumed that the two users considered have small channel gains, i.e., rather low transmission capacity measures. Figs. 3a and 3b exhibit two scenarios, where the channels of the users 1 and 3 have the same singular vectors but different singular values. Correspondingly the channels of users 2 and 4 differ only in the singular values. Singular values may in embodiments be considered as channel gains or transmission capacity measures. In Fig. 3 the capacity region and the region achievable with TDMA are plotted. Although the maximum single user rate also becomes higher with increasing channel gain, the difference between this rate and the sum rate obtainable when both users are served simultaneously also increases.

Another aspect to be taken into account when evaluating the sum capacity is the spatial alignment of the users' radio channels. Selecting the users for $S$ according to the largest Frobenius norms or equivalently according to the largest single-user rates as proposed in H. Viswanathan, S. Venkatesan, and H. Huang, Downlink Capacity Evaluation of Cellular Networks With Known-Interference Cancellation, IEEE Journal on Selected Areas in Communications, 21 (6):802-811, June 2003 is a simple method for pre-selection but it completely fails if the channels of the users with the largest channel gains are strongly spatially aligned.

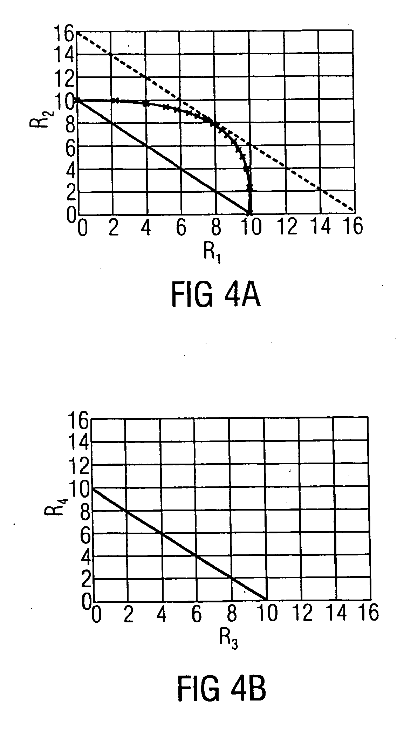

Fig. 4a and Fig. 4b show two view graphs, illustrating the sum capacity in a two user scenario when their spatial separation is high, see Fig. 4a, respectively when their spatial separation is evanescent, i.e., when they are spatially aligned, see Fig. 4b. Fig. 4b shows an extreme case, where the ranges of the two users channels completely overlap. Furthermore the right singular vectors of the users have been chosen identically. Hence spatial separation of the users is not possible and the capacity region coincides with the TDMA rate region. On the other hand large gains are possible, if the users' channels are not spatially aligned, i.e. the range of one user's channel completely lies in the nullspace of the other user's channel, as shown in Fig. 4a. In this case the two users do not interfere with each other and both users can fully benefit from their channel gains. Therefore the spatial alignment of the users' radio channels can be identified as a second factor of influence for the sum capacity.

Another factor to be taken into account for the sum capacity is the balance of the users' radio channels. The factors of influence mentioned so far also play a crucial role in grouping algorithms for zero forcing approaches. The next criterion, namely the balance of the users' channels is more specific to the objective function $g(S)$. By balance of channels it is referred to the ratio of the Frobenius norms of the users' channels, where in embodiments the Frobenius norms may serve as transmission capacity measures.

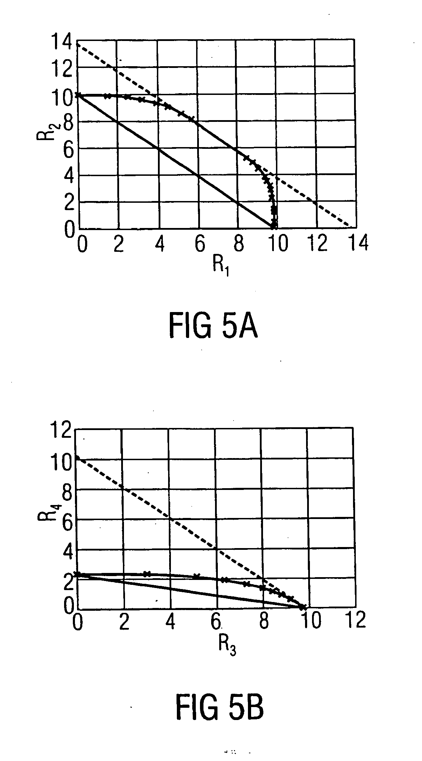

Figs. 5a and 5b show two view graphs illustrating the sum capacity in a two user scenario, wherein Fig. 5a shows the sum capacity for a scenario where the two users have balanced channels, i.e., both users have similar channel gains or transmission capacity measures. Fig. 5b illustrates the case where the two users in the scenario have very different channel gains, i.e., unbalanced channels or unbalanced transmission capacity measures.

An unbalanced scenario is shown in Fig. 5b. User 3 has a much larger channel gain than user 4, which implicitly leads to a larger single-user rate for this user. In such an unbalanced scenario the point of maximum sum capacity lies close to or, as in the example depicted in Fig. 5b, even on the point, where the user with the largest channel gain obtains all available system resources. That is because a shift of resources to other users leads only to marginal gains, whereas the losses for the strongest user involved therewith are more harmful for sum capacity. On the other hand for users with similarly large channel gains the point of maximum sum rate is likely to lie far apart from a corner point, where one user receives all system resources. That implies a potential for higher gains in sum rate.

From the factors of influence described in the previous sections it can be observed that gains and balance of the channels can be determined relatively easy, while the spatial alignment of the channels cannot be computed as simple as the Frobenius norms or transmission capacity measures. Furthermore to check the latter property for each combination of users new computations are required, while for the other properties it suffices to compute the scalar Frobenius norms as transmission capacity measures once for every user and compare them to find an appropriate group.

This fact is the motivation for a two-phase user grouping embodiment. In phase I of the embodiment, e.g. carried out by the pre-selector 110, users are sorted out according to the simple criteria, in phase II of the embodiment, e.g. carried out by the selector 120, the sub-group for transmission, i.e. to be served, with SDMA based approaches employing DPC is selected from the reduced set or the pre-selection group of users obtained in phase I by a more complicated search. In the following the two phases of the embodiment will be detailed.

In phase I the aim is to find a set or a pre-selection group $\hat{S}$ containing candidate users for the group of users to be served with SDMA. In order to control the complexity of the following phase it is proposed to predefine the cardinality of $\hat{S}$, whereas $N \leq |\hat{S}| < K$. One can select $|\hat{S}| = N$ in embodiments which skip phase II. First the Frobenius norms of all users' channels $\|H_k\|_F$ can be computed and sorted e.g. in descending order. In the present embodiment beginning with the user with the largest Frobenius norm or transmission capacity measure it is checked whether

$$\frac{\left\|\boldsymbol{H}_i\right\|_F}{\left\|\boldsymbol{H}_{i+1}\right\|_F} < \alpha \, , \qquad (1.2)$$

where $\alpha$ denotes a predefined threshold and it is assumed that $i$ indices the Frobenius norms in decreasing order. If (1.2) holds, user $i$ is not excluded from the set and the test is stopped, otherwise this user is excluded and the test is continued with user $i+1$. (1.2) therefore excludes or de-selects users which have much larger channel gains than the other users and therefore tries to avoid the case of unbalanced channels. Afterwards the desired size of the set $\hat{S}$ pre-selection group is achieved by removing the users with the smallest Frobenius norms according to the first factor of influence. Similarly, embodiments may additionally remove users from $\hat{S}$ until the smallest Frobenius norm in $\hat{S}$ is larger than $1/\alpha$ or another factor times the second smallest Frobenius norm. Optionally a different factor may be used. In this case $\hat{S}$ may have less users than originally planned.

In the following the second phase, phase II, of the embodiment will be illuminated, which may be carried out by the selector 120. In this phase the spatial compatibility of the users is checked and the final set $S$ is selected. As a measure for compatibility the figures proposed e.g. in M. Fuchs, G. Del Galdo, and M. Haardt. Low-Complexity Space -Time - Frequency Scheduling for MIMO Systems With SDMA, IEEE Transactions on Vehicular Technology, 56:2775 - 2784, September 2007, or

T.F. Maciel and A. Klein, A Low-Complexity SDMA Grouping Strategy for the Downlink of Multi-User MIMO Systems, In Proc. of IEEE International Symposium on Personal, Indoor and Mobile Radio Communications (PIMRC), 2006,

are not considered for this embodiment as those are intended for linear zero-forcing approaches. In the present embodiment an estimation for the sum capacity at high SNR from J. Lee and N. Jindal, High SNR Analysis for MIMO Broadcast Channels, Dirty Paper Coding Versus Linear Precoding, IEEE Transaction on Information Theory, 53: 4787-4792, 2007, is rather taken into account.

Besides the spatial correlations between the users this formula also takes into account that DPC can be employed at the transmitter and that therefore it is not solely relied on orthogonalities between the signal spaces of the users in the set. As the transmit power $P_{Tx}$ goes to infinity, the sum capacity $C_{sum}(S)$ can be computed according to

$$\lim_{P_{Tx} \to \infty} C_{sum}(S) = \log_2 \left| \boldsymbol{I} + \sum_{k \in S} \boldsymbol{H}_k^H \boldsymbol{H}_k \frac{P_{Tx}}{M_{Rx,k} N} \right| \qquad (1.3)$$

with

$$\sum_{k \in S} M_{Rx,k} \leq M_{Tx} \, , \qquad (1.4)$$

alternatively an estimated sum capacity may be evaluated by

$$\lim_{P_{Tx} \to \infty} C_{sum}(S) \approx \log_2 \left| I + \sum_{k \in S} H_k^H H_k \frac{P_{Tx}}{M_{Rx,k} N} \right|$$

with

$$\sum_{k \in S} M_{Rx,k} > M_{Tx} \, ,$$

or

$$C_{sum}(S) \approx \log_2 \left| I + \sum_{k \in S} H_k^H H_k \frac{P_{Tx}}{M_{Rx,k} N} \right| \quad \text{for} \quad P_{Tx} < \infty \, ,$$

where $M_{Rx,k}$ denotes the number of receive antennas of user $k$ and $I$ denotes the identity matrix. Hence at high SNR the optimum covariance matrices in the dual uplink become scaled identity matrices.

When the conditions of (1.4) are not met or at medium SNR, (1.3) constitutes a good approximation according to the above estimation for the sum capacity in embodiments, according to
J. Lee and N. Jindal, High SNR Analysis for MIMO Broadcast Channels, Dirty Paper Coding Versus Linear Precoding, IEEE Transaction on Information Theory, 53:4787-4792, 2007.

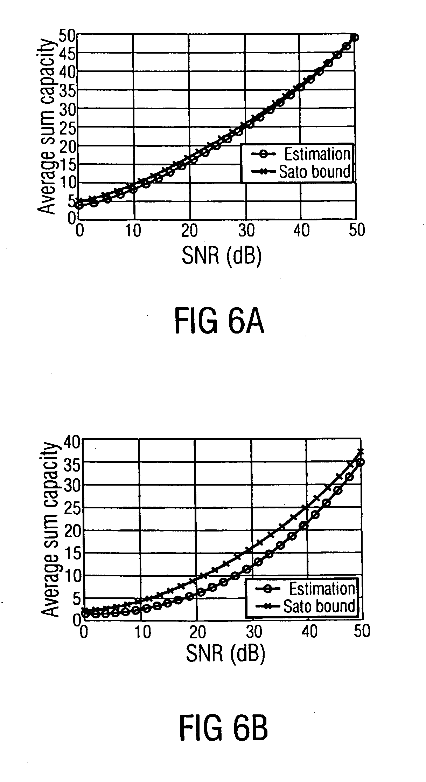

Figs. 6a and 6b show view graphs illustrating simulation results. Fig. 6a depicts simulation results on the average sum capacity in a two user scenario, and Fig. 6b illustrates similar simulation results in a four user scenario. Both view graphs show the average sum capacity versus the user SNR (SNR = Signal-to-Noise-Ratio).

Figs. 6a and 6b show a comparison of the estimated sum capacity with the Sato bound in a system with $K$=2 users, $M_{Tx}$ = 4 transmit antennas and $M_{Rx,k}$ = 2 receive antennas (for $k$ =1,2). The capacities have been averaged over 10000 spatial indoor Non-Line-of Sight (NLOS = Non-Line-of Sight) scenarios which have been created according to the WINNER (WINNER = Wireless World Initiative New Radio) channel model D.S. Baum et al, Final Report on Link Level and System Level Channel Models, Technical report, IST-2003-507581 WINNER D5.4 v. 1.0, 2005.

When (1.4) is fulfilled, as in Fig. 6a, the estimation fits the real capacity quite well on average already at medium SNR. In case of 4 users with 2 receive antennas, when the condition (1.4) is not fulfilled, the error becomes larger, nevertheless the two curves show the same behavior. For pre-selection purposes, i.e. to find the pre-selection group best suitable for SDMA, this approximation will be enough in some embodiments. In order to avoid the inaccuracies associated with not fulfilling (1.4), embodiments may also compute the SVDs of the channels

$$H_k = \sum_{i=1}^{rank(H_k)} \sigma_{k,i} u_{k,i} v_{k,i}^H$$

and consider each product $\sigma_{k,i} v_{k,i}^H$ as separate channel. These equivalent channels result from applying the left singular vectors as receive filters. However, this imposes additional computational complexity, as the SVDs of the users' channels are required, whereas possible improvements are low.

(1.3) may still be too complicated to perform an exhaustive search for the best set $S$ within $\hat{S}$ in some practical environments. Embodiments may therefore carry out a successive enlargement of the set or intermediate selection group $S$ as follows. The first user in the set, denoted as $\pi(1)$, can be the user with maximum Frobenius norm in the pre-selection group $\hat{S}$, i.e.

$$\pi(1) = \arg \max_{k \in \hat{S}} \| H_k \|_F \, . \qquad\qquad (1.5)$$

In each of the consecutive steps the user is added to the sub-group S which leads to the strongest increase in estimated sum capacity. The i-th user is therefore determined according to

$$\pi(i) = \arg\max_{k \in \hat{S} \setminus S} \Delta C_{sum}(S \cup k) ,$$

whereas

$$\Delta C_{sum}(S \cup k) = C_{sum}(S \cup k) - C_{sum}(S) .$$

Afterwards S is updated according to $S = S \cup \pi(i)$. In order to compute $C_{sum}(S)$ in each step the final power allocation is used, i.e. the factor $1/N$ remains in (1.3). Note, that therefore as long as S contains less than N users, $C_{sum}(S)$ may not be an estimation of the sum capacity achievable with the given transmit power. The algorithm is finished after N steps, when the sub-group S exhibits the desired cardinality.

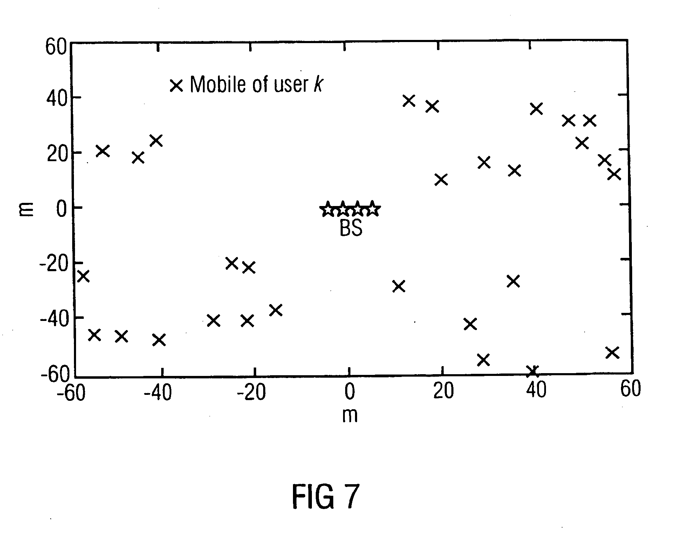

In the following simulation results will be presented. For the simulations the WINNER channel model D.S. Baum et al, Final Report on Link Level and System Level Channel Models, Technical report, IST-2003-507581 WINNER D5.4 v. 1.0, 2005 whereas a single carrier system is used. The bandwidth equals 132 KHz and a transmitter with $M_{Tx} = 4$ antennas is placed in the center of a 120m×120m indoor scenario. For the first simulation 30 users have been randomly placed in this area. Each user operates $M_{Rx,k} = 2$ receive antennas and no Line-of-Sight to the transmitter. Fig. 7 exhibits a sample scenario. Fig. 7 illustrates a simulation scenario, where a base station BS utilizing four antennas indicated by stars is located in the center of the scenario. In Fig. 7, crosses indicate the 30 users equally distributed over a 120m×120m indoor NLOS (NLOS = None-Line-of Sight) scenario.

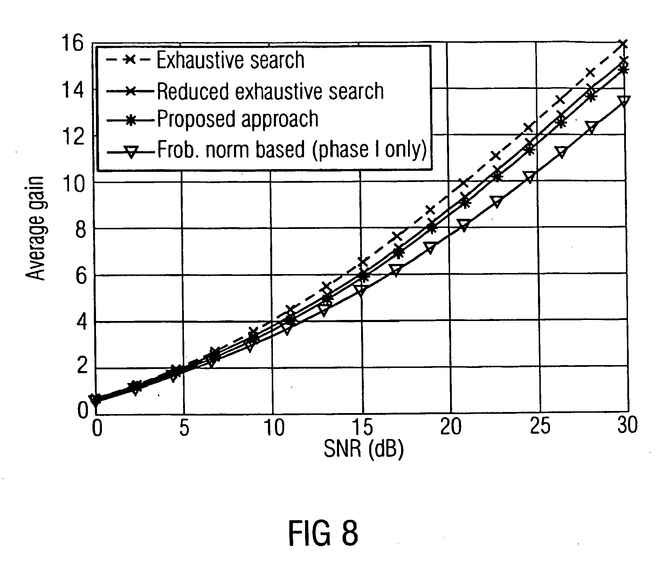

Fig. 8 shows a view graph illustrating simulation results of the average gain versus the SNR of a user. The view graph indicates four different graphs, which are exhaustive search (indicated by dashed line and crosses), reduced exhaustive search according an embodiment (indicated by solid line and crosses), proposed approach according to an embodiment (indicated by solid line and asterisks) and Frobenius norm according to an embodiment (phase 1 only, indicated by solid line and triangles).

In Fig. 8 the gain g(S) averaged over 1500 random scenarios is shown. The gain is measured as the difference in sum rate achievable with SESAM and the maximum single-user rate within S. For phase I the cardinality of the set of the pre-selection group $\hat{S}$ has been set to $|\hat{S}| = 15$ and the threshold $\alpha$ has been chosen to be $\alpha = 30$. The cardinality of the final set or intermediate selection group S has been equal to the number of transmit antennas, i.e. $|S| = M_{tx} = 4$. The curve labeled by "Reduced exhaustive search" shows the gain achievable if the user $\pi(1)$ determined according to (1.5) is forced to be in the set S, i.e. the exhaustive search is only conducted to find the three further users to be served with SESAM together with user $\pi(1)$ in this embodiment.

Hence the difference between the embodiment of exhaustive search and the embodiment of reduced exhaustive search is mainly due to the fact that the embodiment may choose the first user in a heuristic but simple manner. If this user is part of S, both embodiments lead to the same performance. The lowest curve shows the gains achievable when the user grouping is conducted with $|\hat{S}| = N$, i.e. phase II is completely skipped. Apart from the ratio test (1.2), this algorithm is similar to the one presented by H. Viswanathan, S. Venkatesan, and H. Huang, Downlink Capacity Evaluation of Cellular Networks With Known-Interference Cancellation, IEEE Journal on Selected Areas in Communications, 21 (6):802-811, June 2003, where the users are selected according to the strongest single-user rates.

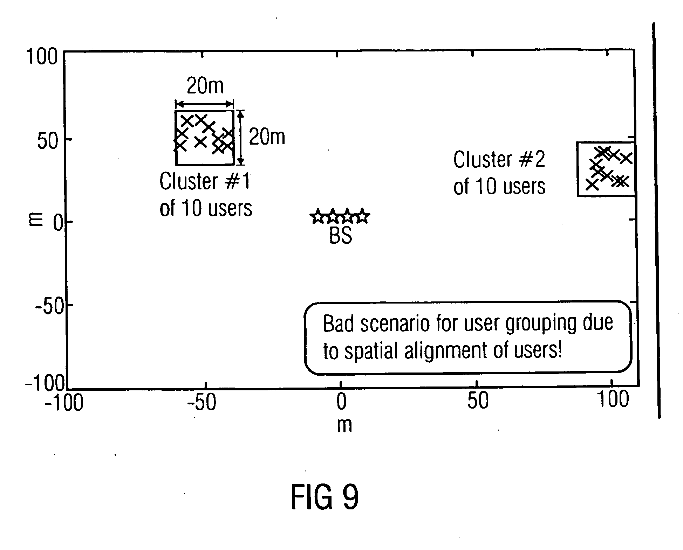

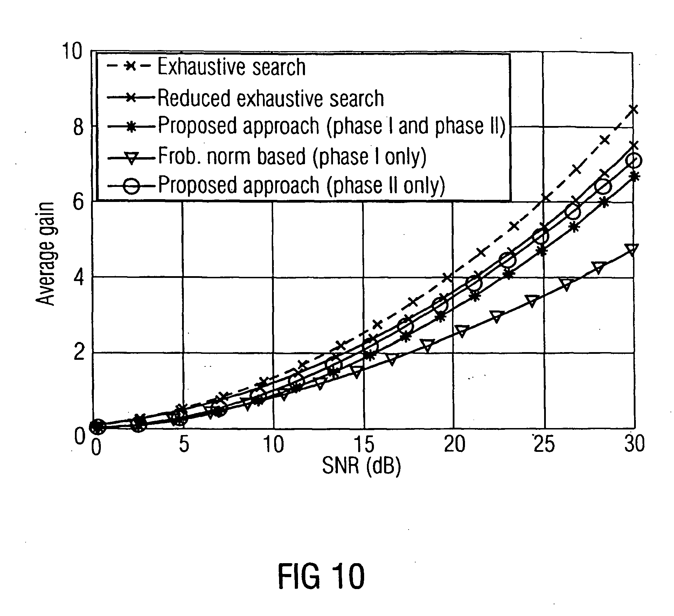

Next, scenarios are considered where the users are highly spatially aligned. Fig. 9 illustrates another simulation scenario, with the base station BS in the center and users gathered in two clusters, namely cluster #1 and cluster #2. Cluster size is 20m×20m and 10 users are equally distributed within the clusters. From Fig. 9 can be seen that users being located in different clusters have a good spatial separation, while users located in the same cluster are almost spatially aligned. 20 users are randomly placed into two clusters centered at (-50m, 50m) and (100m, 30m), whereas the transmitter defines the center of the coordinate system. For each scenario the users have been randomly placed in a square of size 20m×20m around these center points. Fig. 9 exhibits a sample scenario. The resulting gains in sum rate averaged over 5000 clustered scenarios are shown in Fig. 10.

Fig. 10 shows a view graph illustrating simulation results of the average gain over the SNR of a user. Five graphs are shown in Fig. 10, exhaustive search (indicated by dashed line with cross), reduced exhaustive search according to an embodiment (indicated by solid line with cross), proposed approach according to an embodiment (phase II only, indicated by solid line with circle), proposed approach according to an embodiment (phase I and phase II, indicated by solid line with asterisk) and Frobenius norm based according to an embodiment (phase I only, indicated by solid line with triangle).

Fig. 10 also shows simulation results where phase I is completely skipped (indicated by solid line with circles), i.e. $|\hat{S}|$ = 20. This algorithm leads to the best performance without an exhaustive search, whereas it is only slightly above the embodiment with $|\hat{S}|$ = 10. Applying phase I only may lead to severe performance degradation.

Embodiments of the present invention allow to establish advanced spatial assignment algorithms as, for example, SESAM in a MIMO communication scenario, at a reasonable complexity. Embodiments have the advantage, that spatial algorithms requiring high processing performance can be carried out on a pre-selected group or intermediate selection group of users, which is smaller than the group of all users potentially available for transmission. Embodiments of the present invention therewith enable implementation of sophisticated spatial multiplexing or MIMO algorithms, increasing system capacity, and increasing user satisfaction. Moreover, since embodiments of the present invention may enable provision of higher rate and higher quality services, embodiments may also contribute to enhancement of the service portfolio in mobile communication systems.

In general, the computational complexity of sum capacity approaching multiuser MIMO transmission techniques increases with the number of users. Thus, in highly loaded systems, the computational burden when considering all users for transmit signal processing, is often too high. In such cases, embodiments of the present invention provide the advantage that it is possible to group users, e.g. through a pre-selection and apply the numerically involved algorithms only to users of a pre-selected group or intermediate selection group, i.e. the sub-group for transmission, separately.

Embodiments of the present invention can combat the problem of finding an appropriate group of users to be served with complex transmit signal processing algorithms. Embodiments may perform user grouping or user pre-selection such that the computational effort for these algorithms leads to the maximum possible gain in sum rate compared to simpler approaches, where no Dirty Paper Coding is used. Embodiments may carry out three phases. First, a pre-selection of users may be made based on computationally efficient criteria derived e.g. from the Frobenius norms of the channels, while in the second phase, computationally more expensive or involved selection of the intermediate selection group of users is selected based on spatial compatibility. In the third phase, computationally most complex algorithms, as e.g. SESAM, are used to determine users, which are actually selected for transmission. The algorithms of the third phase can be performed with the reduced amount of users of the intermediate selection group by embodiments of the present invention.

Depending on certain implementation requirements of the inventive methods, the inventive methods can be implemented in hardware or in software. The implementation can be performed using a digital storage medium, in particular a flash memory, a disc, a DVD or a CD having electronically readable control signals stored thereon, which cooperate with a programmable computer system such that the inventive methods are performed. Generally, the present invention is therefore a machine readable carrier with a program code being operative for performing the inventive methods when the computer program product runs on computer or processor. In other words, the inventive methods are, therefore, a computer program having a program code for performing at least one of the inventive methods when the computer program runs on a computer or a processor.

List of Reference Signs

100    User Selection Apparatus
110    Pre-selector
120    Selector

200    De-selecting
205    Receiving
210    Sorting
215    Including
220    Comparing
225    De-selecting
230    De-selecting

250    Selecting
255    Receiving
260    Selecting
265    Evaluating
270    Selecting
275    Comparing

**Claims**

1. A user selection apparatus (100) for being operative in a mobile communication system and for selecting a sub-group of users from a plurality of users for transmission, a user being adapted for communicating through a multiple-input-multiple-output (MIMO = Multiple-Input-Multiple-Output) radio channel, the user selection apparatus (100) comprising:

   a selector (120) for selecting users from the plurality of users for an intermediate selection group S of users k based on a spatial compatibility of the MIMO radio channels of the users of the plurality of users, wherein the spatial compatibility corresponds to a combined transmission capacity measure $C_{sum}$ (S) of the users of the intermediate selection group S, **characterized in that** the selector (120) is configured

   for determining channel energy matrices for the users from the plurality of users, and
   for accumulating the channel energy matrices for different combinations of users to obtain an accumulated matrix for each combination of users, wherein the measure on the spatial compatibility for a combination of users is provided based on a determinant of the accumulated matrix for the combination of users; and
   by the apparatus comprising

   a processor (115) for determining the sub-group of users for transmission from the intermediate selection group S based on the MIMO radio channels.

2. The user selection apparatus (100) of claim 1, wherein the selector (120) is adapted for selecting from the plurality of users comprising a first user having a MIMO radio channel $H_1$, a second user having a MIMO radio channel $H_2$ and a third user having a MIMO radio channel $H_3$, and for evaluating a first combined transmission capacity measure $C_{sum}(S)_1$ based on $H_1$, a second combined transmission capacity measure $C_{sum}(S)_2$ based on $H_2$, a third combined transmission capacity measure $C_{sum}(S)_3$ based on $H_3$, a fourth combined transmission capacity measure $C_{sum}(S)_{12}$ based on $H_1$ and $H_2$, a fifth combined transmission capacity measure $C_{sum}(S)_{13}$ based on $H_1$ and $H_3$, a sixth combined transmission capacity measure $C_{sum}(S)_{23}$ based on $H_2$ and $H_3$ and a seventh combined transmission capacity measure $C_{sum}(S)_{123}$ based on $H_1$, $H_2$ and $H_3$, and for selecting for the intermediate selection group S the combination of users with the highest combined transmission capacity measure.

3. The user selection apparatus (100) of claim 1 or 2, wherein the combined transmission capacity measure of a combination of users $k$ is based on a determinant

$$\left| \sum_{k \in S} H_k^H H_k \right| .$$

4. The user selection apparatus (100) of one of the claims 1 to 3, wherein the selector (120) is adapted for evaluating a first combined transmission capacity measure of a first user of the intermediate selection group and a second non-selected user, and for evaluating a second combined transmission capacity measure of the first user of the intermediate selection group and a third non-selected user, and for selecting the second user for the intermediate selection group if the first combined transmission capacity measure is higher than the second combined transmission capacity measure and for selecting the third user for the intermediate selection group otherwise.

5. The user selection apparatus (100) of one of the claims 1 to 4, wherein the selector (120) is adapted for selecting for the intermediate selection group a combination of users from the plurality of users resulting in an intermediate selection group of users having a higher combined transmission capacity measure than a user with the highest transmission capacity measure from the plurality of users.

6. The user selection apparatus (100) of one of the claims 1 to 5, wherein the selector (120) is adapted for selecting for the intermediate selection group S users from the plurality of users $\hat{S}$ for which a combined transmission capacity measure in terms of a sum capacity $C_{sum}(S)$, according to

$$\lim_{P_{Tx} \to \infty} C_{sum}(S) = \log_2 \left| I + \sum_{k \in S} H_k^H H_k \frac{P_{Tx}}{M_{Rx,k} N} \right|$$

with

$$\sum_{k \in S} M_{Rx,k} \leq M_{Tx}$$

or an estimated sum capacity $C_{sum}(S)$ according to

$$\lim_{P_{Tx} \to \infty} C_{sum}(S) \approx \log_2 \left| I + \sum_{k \in S} H_k^H H_k \frac{P_{Tx}}{M_{Rx,k} N} \right|$$

with

$$\sum_{k \in S} M_{Rx,k} > M_{Tx} \ ,$$

or

$$C_{sum}(S) \approx \log_2 \left| I + \sum_{k \in S} H_k^H H_k \frac{P_{Tx}}{M_{Rx,k} N} \right| \quad for \quad P_{Tx} < \infty \ ,$$

is optimized or maximized, where $M_{Rx,k}$ denotes a number of receive antennas of a user $k$, $P_{Tx}$ is a transmit power, $H_k$ represents a MIMO radio channel matrix of user $k$, $I$ is an identity matrix, $N$ represents the cardinality of $S$ and $M_{Tx}$ denotes a number of transmit antennas used for transmission.

7. The user selection apparatus (100) of one of the claims 1 to 6, wherein the selector (120) is adapted for selecting a user $\pi(1)$ for the intermediate selection group $S$ having a MIMO radio channel represented by a MIMO radio channel matrix $H_{\pi}(1)$ having a highest Frobenius norm of the users of the plurality of users $\hat{S}$ according to

$$\pi(1) = \arg \max_{k \in \hat{S}} \left\| H_k \right\|_F \ .$$

8. The user selection apparatus (100) of claim 7, wherein the selector (120) is adapted for adding a user $\pi(i)$ from non-selected users $k$ to the intermediate selection group $S$ for which an increase in sum capacity or estimated sum capacity $\Delta C_{sum}(S \cup k)$ is the strongest, according to

$$\pi(i) = \arg \max_{k \in \hat{S} \backslash S} \Delta C_{sum}(S \cup k) \ ,$$

whereas

$$\Delta C_{sum}(S \cup k) = C_{sum}(S \cup k) - C_{sum}(S),$$

and the sum capacity $C_{sum}(S)$ is determined according to

$$\lim_{P_{Tx} \to \infty} C_{sum}(S) = \log_2 \left| I + \sum_{k \in S} H_k^H H_k \frac{P_{Tx}}{M_{Rx,k} N} \right|$$

with

$$\sum_{k \in S} M_{Rx,k} \leq M_{Tx}$$

or an estimated sum capacity $C_{sum}(S)$ according to

$$\lim_{P_{Tx} \to \infty} C_{sum}(S) \approx \log_2 \left| I + \sum_{k \in S} H_k^H H_k \frac{P_{Tx}}{M_{Rx,k} N} \right|$$

with

$$\sum_{k \in S} M_{Rx,k} > M_{Tx},$$

or

$$C_{sum}(S) \approx \log_2 \left| I + \sum_{k \in S} H_k^H H_k \frac{P_{Tx}}{M_{Rx,k} N} \right| \text{ for } P_{Tx} < \infty,$$

where $M_{Rx,k}$ denotes a number of receive antennas of user $k$, $P_{Tx}$ is the transmit power, $H_k$ represents the MIMO radio channel matrix of user $k$, $I$ is an identity matrix, $N$ represents the cardinality of $S$ and $M_{Tx}$ denotes a number of transmit antennas used for transmission.

9.  The user selection apparatus (100) of one of the claims 1 to 8, wherein the processor (115) is adapted for processing the MIMO radio channels of the users of the intermediate group of users to obtain processed MIMO radio channels and for determining the sub-group of users for transmission based on a spatial property of the processed MIMO radio channels of the users of the intermediate selection group.

10. The user selection apparatus (100) of claim 9, wherein the processor (115) is adapted for determining users from the intermediate selection group for the sub-group based on SESAM (SESAM = Successive Encoding Successive Allocation Method).

11. The user selection apparatus (100) of one of the claims 1 to 10 further comprising a pre-selector (110) for de-selecting a user having a transmission capacity measure which is higher than a transmission capacity measure of another user by a predetermined amount to obtain a pre-selection group not including the de-selected user, such that the pre-selection group comprises two users having two transmission capacity measures which are equal or different from each other by less than the predetermined amount, and wherein the selector (120) is adapted for selecting users for the intermediate selection group from the pre-selection group.

**12.** The user selection apparatus (100) of claim 11, wherein the pre-selector (110) is adapted for determining the transmission capacity measure in terms of a highest achievable data rate of a user's spatial sub-channel of the MIMO radio channel and wherein the predetermined amount is absolute or relative.

**13.** The user selection apparatus (100) of claim 11 or 12, wherein the pre-selector (110) is adapted for determining a transmission capacity measure by evaluating a singular value decomposition of a user's MIMO radio channel matrix representing the user's MIMO radio channel and wherein the pre-selector (110) is adapted for determining the transmission capacity measure in terms of the highest singular value of a user's MIMO radio channel matrix.

**14.** The user selection apparatus (100) of one of the claims 11 to 13, wherein the pre-selector (110) is adapted for determining the transmission capacity measure in terms of a Frobenius norm of a user's MIMO radio channel matrix representing the user's MIMO radio channel.

**15.** The user selection apparatus (100) of one of the claims 11 to 14, wherein the pre-selector (110) is adapted for sorting the users according to the transmission capacity measures and wherein the pre-selector (110) is adapted for comparing a user's transmission capacity measure to an other user's transmission capacity measure, the other user having the next lower or the next higher transmission capacity measure within the plurality of users, wherein the pre-selector (110) is further adapted for evaluating a quotient of the user's transmission capacity measure and the other users transmission capacity measure against pre-determined thresholds and for de-selecting the user from the pre-selection group for which the quotient exceeds a threshold if the other user's transmission capacity measure is the next lower transmission capacity measure or for de-selecting the user from the pre-selection group for which the quotient is below another threshold if the other user's transmission capacity measure is the next higher transmission capacity measure.

**16.** Method for selecting a sub-group of user's from a plurality of users for transmission in a mobile communication system, a user being adapted for communicating through a MIMO radio channel, comprising the steps of:

selecting (250) users from the plurality of users for an intermediate selection group $S$ of users $k$ based on a spatial compatibility of the MIMO radio channels of the users of the plurality of users, wherein the spatial compatibility corresponds to a combined transmission capacity measure $C_{sum}(S)$ of the users of the intermediate selection group $S$, **characterized in that** the step of selecting comprises:

determining channel energy matrices for the users from the plurality of users, and accumulating the channel energy matrices for different combinations of users to obtain an accumulated matrix for each combination of users, wherein the measure on the spatial compatibility for a combination of users is provided based on a determinant of the accumulated matrix for the combination of users; and by the method comprising the step of

determining the sub-group of users for transmission from the intermediate selection group $S$ based on the MIMO radio channels.

**17.** The method of claim 16, further comprising a step of de-selecting (200) users from the plurality of users to obtain a pre-selection group and wherein the step of selecting (250) users for the intermediate selection group is based on the pre-selection group, wherein the step of de-selecting (200) comprises the steps of
receiving (205) a pre-determined size of the pre-selection group;
sorting (210) the plurality of users according to the Frobenius norms or single user rates of their MIMO radio channel matrices representing their MIMO radio channels in decreasing order;
including (215) all users in the pre-selection group;
comparing (220) the Frobenius norm or single user rate of the user with the highest Frobenius norm or the highest single user rate from the pre-selection group with the Frobenius norm or single user rate of the user having the second highest Frobenius norm or the second highest single user rate from the pre-selection group;
de-selecting (225) the user with the highest Frobenius norm or the highest single user rate from the pre-selection group and returning to the step of comparing (220) if the highest Frobenius norm or the highest single user rate is higher than a factor multiplied by the second highest Frobenius norm or the second highest single user rate of the user from the pre-selection group; and
de-selecting (230) users with the lowest Frobenius norms or the lowest single user rates from the pre-selection group to match the pre-determined size.

**18.** The method of claim 17, wherein the step of selecting (250) comprises the steps of
receiving (255) a pre-determined size of the intermediate selection group;
selecting (260) the user having the highest Frobenius norm or the highest single user rate from the pre-selection group;
evaluating (265) a capacity or a sum rate increase for non-selected users in the pre-selection group on the basis of the selected users in the intermediate selection group;
selecting (270) the user with the highest capacity or the highest sum rate increase for the intermediate selection group; and
returning to the step of evaluating (265) until the size of the intermediate selection group has reached the pre-determined size of the intermediate selection group.

**19.** Computer program product having a program code for performing one of the methods of claims 16 to 18 when the program code runs on a processor.

## Patentansprüche

**1.** Eine Nutzerauswahlvorrichtung (100) zum Wirksamsein in einem Mobilkommunikationssystem und zum Auswählen einer Untergruppe von Nutzern aus einer Mehrzahl von Nutzern für eine Übertragung, wobei ein Nutzer angepasst ist zum Kommunizieren durch einen MIMO-Funkkanal (MIMO = Multiple-Input-Multiple-Output = Mehrfacheingang-Mehrfachausgang), wobei die Nutzerauswahlvorrichtung (100) folgende Merkmale aufweist:

einen Selektor (120) zum Auswählen von Nutzern aus der Mehrzahl von Nutzern für eine Zwischenauswahlgruppe $S$ von Nutzern $k$ basierend auf einer räumlichen Kompatibilität der MIMO-Funkkanäle der Nutzer der Mehrzahl von Nutzern, wobei die räumliche Kompatibilität einem kombinierten Übertragungskapazitätsmaß $C_{sum}(S)$ der Nutzer der Zwischenauswahlgruppe $S$ entspricht, **dadurch gekennzeichnet, dass** der Selektor (120) konfiguriert ist

zum Bestimmen von Kanalenergiematrizen für die Nutzer von der Mehrzahl von Nutzern, und
zum Akkumulieren der Kanalenergiematrizen für unterschiedliche Kombinationen von Nutzern, um eine akkumulierte Matrix für jede Kombination von Nutzern zu erhalten, wobei das Maß der räumlichen Kompatibilität für eine Kombination von Nutzern bereitgestellt wird basierend auf einer Determinante der akkumulierten Matrix für die Kombination von Nutzern; und **dadurch**, dass die Vorrichtung folgendes Merkmal aufweist:

einen Prozessor (115) zum Bestimmen der Untergruppe von Nutzern für eine Übertragung von der Zwischenauswahlgruppe $S$ basierend auf den MIMO-Funkkanälen.

**2.** Die Nutzerauswahlvorrichtung (100) gemäß Anspruch 1, bei der der Selektor (120) angepasst ist zum Auswählen aus der Mehrzahl von Nutzern, die einen ersten Nutzer mit einem MIMO-Funkkanal $H_1$, einen zweiten Nutzer mit einem MIMO-Funkkanal $H_2$ und einen dritten Nutzer mit einem MIMO-Funkkanal $H_3$ aufweist, und zum Bewerten eines ersten kombinierten Übertragungskapazitätsmaßes $C_{sum}(S)_1$ basierend auf $H_2$, eines zweiten kombinierten Übertragungskapazitätsmaßes $C_{sum}(S)_2$ basierend auf $H_2$, eines dritten kombinierten Übertragungskapazitätsmaßes $C_{sum}(S)_3$ basierend auf $H_3$, eines vierten kombinierten Übertragungskapazitätsmaßes $C_{sum}(S)_{12}$ basierend auf $H_1$ und $H_2$, eines fünften kombinierten Übertragungskapazitätsmaßes $C_{sum}(S)_{13}$ basierend auf $H_1$ und $H_3$, eines sechsten kombinierten Übertragungskapazitätsmaßes $C_{sum}(S)_{23}$ basierend auf $H_2$ und $H_3$, und eines siebten kombinierten Übertragungskapazitätsmaßes $C_{sum}(S)_{123}$ basierend *auf* $H_1$, $H_2$ und $H_3$, und zum Auswählen, für die Zwischenauswahlgruppe $S$, der Kombination von Nutzern mit dem höchsten kombinierten Übertragungskapazitätsmaß.

**3.** Die Nutzerauswahlvorrichtung (100) gemäß Anspruch 1 oder 2, bei der das kombinierte Übertragungskapazitätsmaß einer Kombination von Nutzern $k$ basiert auf einer Determinante

$$\left| \sum_{k \in S} H_k^H H_k \right|.$$

4. Die Nutzerauswahlvorrichtung (100) gemäß einem der Ansprüche 1 bis 3, bei der der Selektor (120) angepasst ist zum Bewerten eines ersten kombinierten Übertragungskapazitätsmaßes eines ersten Nutzers der Zwischenauswahlgruppe und eines zweiten nicht ausgewählten Nutzers, und zum Bewerten eines zweiten kombinierten Übertragungskapazitätsmaßes des ersten Nutzers der Zwischenauswahlgruppe und eines dritten nicht ausgewählten Nutzers, und zum Auswählen des zweiten Nutzers für die Zwischenauswahlgruppe, falls das erste kombinierte Übertragungskapazitätsmaß höher ist als das zweite kombinierte Übertragungskapazitätsmaß, und andernfalls zum Auswählen des dritten Nutzers für die Zwischenauswahlgruppe.

5. Die Nutzerauswahlvorrichtung (100) gemäß einem der Ansprüche 1 bis 4, bei der der Selektor (120) angepasst ist zum Auswählen, für die Zwischenauswahlgruppe, einer Kombination von Nutzern aus der Mehrzahl von Nutzern, was zu einer Zwischenauswahlgruppe von Nutzern führt, die ein höheres kombiniertes Übertragungskapazitätsmaß aufweist als ein Nutzer mit dem höchsten Übertragungskapazitätsmaß von der Mehrzahl von Nutzern.

6. Die Nutzerauswahlvorrichtung (100) gemäß einem der Ansprüche 1 bis 5, bei der der Selektor (120) angepasst ist zum Auswählen, für die Zwischenauswahlgruppe $S$, von Nutzern aus der Mehrzahl von Nutzern $\hat{S}$, für die ein kombiniertes Übertragungskapazitätsmaß bezüglich einer Summenkapazität $C_{sum}(S)$, gemäß

$$\lim_{P_{Tx} \to \infty} C_{sum}(S) = \log_2 \left| I + \sum_{k \in S} H_k^H H_k \frac{P_{Tx}}{M_{Rx,k}N} \right|$$

mit

$$\sum_{k \in S} M_{Rx,k} \le M_{Tx}$$

oder einer geschätzten Summenkapazität $C_{sum}(S)$ gemäß

$$\lim_{P_{Tx} \to \infty} C_{sum}(S) \approx \log_2 \left| I + \sum_{k \in S} H_k^H H_k \frac{P_{Tx}}{M_{Rx,k}N} \right|$$

mit

$$\sum_{k \in S} M_{Rx,k} > M_{Tx},$$

oder

$$C_{sum}(S) \approx \log_2 \left| I + \sum_{k \in S} H_k^H H_k \frac{P_{Tx}}{M_{Rx,k}N} \right| \text{ für } P_{Tx} < \infty,$$

optimiert oder maximiert ist, wobei $M_{Rx,k}$ eine Anzahl von Empfangsantennen eines Nutzers $k$ bezeichnet, $P_{Tx}$ eine Sendeleistung ist, $H_k$ eine MIMO-Funkkanalmatrix des Nutzers $k$ darstellt, $I$ eine Identitätsmatrix ist, $N$ die Kardinalität von $S$ darstellt und $M_{Tx}$, eine Anzahl von Sendeantennen bezeichnet, die für eine Übertragung verwendet werden.

7. Die Nutzerauswahlvorrichtung (100) gemäß einem der Ansprüche 1 bis 6, bei der der Selektor (120) angepasst ist zum Auswählen eines Nutzers $\pi(1)$ für die Zwischenauswahlgruppe $S$ mit einem MIMO-Funkkanal dargestellt durch eine MIMO-Funkkanalmatrix $H_{\pi(1)}$ mit einer höchsten Frobenius-Norm der Nutzer der Mehrzahl von Nutzern $\hat{S}$ gemäß

$$\pi(1) = \arg\max_{k\in\hat{S}}\left\|\mathbf{H}_k\right\|_F .$$

8. Die Nutzerauswahlvorrichtung (100) gemäß Anspruch 7, bei der der Selektor (120) angepasst ist zum Hinzufügen $\pi(i)$ eines Nutzers von nicht ausgewählten Nutzern $k$ zu der Zwischenauswahlgruppe $S$, für die ein Anstieg bei der Summenkapazität oder geschätzten Summenkapazität $\Delta C_{sum}(S \cup k)$ am stärksten ist, gemäß

$$\pi(i) = \arg\max_{k\in\hat{S}\setminus S} \Delta C_{sum}(S \cup k)$$

während

$$\Delta C_{sum}(S \cup k) = C_{sum}(S \cup k) - C_{sum}(S),$$

und die Summenkapaziät $C_{sum}(S)$ bestimmt wird gemäß

$$\lim_{P_{Tx}\to\infty} C_{sum}(S) = \log_2\left| I + \sum_{k\in S} H_k^H H_k \frac{P_{Tx}}{M_{Rx,k}N}\right|$$

mit

$$\sum_{k\in S} M_{Rx,k} \le M_{Tx}$$

oder eine geschätzte Summenkapazität $C_{sum}(S)$ gemäß

$$\lim_{P_{Tx}\to\infty} C_{sum}(S) \approx \log_2\left| I + \sum_{k\in S} H_k^H H_k \frac{P_{Tx}}{M_{Rx,k}N}\right|$$

mit

$$\sum_{k\in S} M_{Rx,k} > M_{Tx},$$

oder

$$C_{sum}(S) \approx \log_2\left| I + \sum_{k\in S} H_k^H H_k \frac{P_{Tx}}{M_{Rx,k}N}\right| \text{ für } P_{Tx} < \infty,$$

wobei $M_{Rx,k}$ eine Anzahl von Empfangsantennen des Nutzers $k$ bezeichnet, $P_{Tx}$ die Sendeleistung ist, $H_k$ die MIMO-Funkkanalmatrix des Nutzers $k$ darstellt, $I$ eine Identitätsmatrix ist, $N$ die Kardinalität von $S$ darstellt und $M_{Tx}$ eine Anzahl von Sendeantennen bezeichnet, die für eine Übertragung verwendet werden.

9. Die Nutzerauswahlvorrichtung (100) gemäß einem der Ansprüche 1 bis 8, bei der der Prozessor (115) angepasst ist zum Verarbeiten der MIMO-Funkkanäle der Nutzer der Zwischengruppe von Nutzern, um verarbeitete MIMO-Funkkanäle zu erhalten, und zum Bestimmen der Untergruppe von Nutzern für eine Übertragung basierend auf einer räumlichen Eigenschaft der verarbeiteten MIMO-Funkkanäle der Nutzer der Zwischenauswahlgruppe.

10. Die Nutzerauswahlvorrichtung (100) gemäß Anspruch 9, bei der der Prozessor (115) angepasst ist zum Bestimmen von Nutzern von der Zwischenauswahlgruppe für die Untergruppe basierend auf SESAM (SESAM = Successive Encoding Successive Allocation Method = Schrittweise-Codierung-Schrittweise-Zuordnung-Verfahren).

11. Die Nutzerauswahlvorrichtung (100) gemäß einem der Ansprüche 1 bis 10, die ferner einen Vor-Selektor (110) zum Abwählen eines Nutzers mit einem Übertragungskapazitätsmaß, das um einen vorbestimmten Betrag höher ist als ein Übertragungskapazitätsmaß des anderen Nutzers, um eine Vorauswahlgruppe zu erhalten, die den abgewählten Nutzer nicht enthält, so dass die Vorauswahlgruppe zwei Nutzer mit zwei Übertragungskapazitätsmaßen aufweist, die gleich sind oder sich um weniger als den vorbestimmten Betrag unterscheiden, und wobei der Selektor (120) angepasst ist zum Auswählen von Nutzern für die Zwischenauswahlgruppe aus der Vorauswahlgruppe.

12. Die Nutzerauswahlvorrichtung (100) gemäß Anspruch 11, bei der der Vor-Selektor (110) angepasst ist zum Bestimmen des Übertragungskapazitätsmaßes bezüglich einer höchsten erreichbaren Datenrate eines räumlichen Unterkanals des MIMO-Funkkanals eines Nutzers, und wobei der vorbestimmte Betrag absolut oder relativ ist.

13. Die Nutzerauswahlvorrichtung (100) gemäß Anspruch 11 oder 12, bei der der Vor-Selektor (110) angepasst ist zum Bestimmen eines Übertragungskapazitätsmaßes durch Bewerten einer Singulärwertzerlegung einer MIMO-Funkkanalmatrix eines Nutzers, die den MIMO-Funkkanal des Nutzers darstellt, und wobei der Vor-Selektor (110) angepasst ist zum Bestimmen des Übertragungskapazitätsmaßes bezüglich des höchsten Singulärwerts einer MIMO-Funkkanalmatrix eines Nutzers.

14. Die Nutzerauswahlvorrichtung (100) gemäß einem der Ansprüche 11 bis 13, bei der der Vor-Selektor (110) angepasst ist zum Bestimmen des Übertragungskapazitätsmaßes bezüglich einer Frobenius-Norm einer MIMO-Funkkanalmatrix eines Nutzers, die den MIMO-Funkkanal des Nutzers darstellt.

15. Die Nutzerauswahlvorrichtung (100) gemäß einem der Ansprüche 11 bis 14, bei der der Vor-Selektor (110) angepasst ist zum Sortieren der Nutzer gemäß den Übertragungskapazitätsmaßen, und wobei der Vor-Selektor (110) angepasst ist zum Vergleichen eines Übertragungskapazitätsmaßes eines Nutzers mit einem Übertragungskapazitätsmaß eines anderen Nutzers, wobei der andere Nutzer das nächstniedrigere oder das nächsthöhere Übertragungskapazitätsmaß innerhalb der Mehrzahl von Nutzern hat, wobei der Vor-Selektor (110) ferner angepasst ist zum Bewerten eines Quotienten des Übertragungskapazitätsmaßes des Nutzers und des Übertragungskapazitätsmaßes des anderen Nutzers mit vorbestimmten Schwellenwerten und zum Abwählen des Nutzers von der Vorauswahlgruppe, für die der Quotient einen Schwellenwert überschreitet, falls das Übertragungskapazitätsmaß des Nutzers das nächstniedrigere Übertragungskapazitätsmaß ist, oder zum Abwählen des Nutzers von der Vorauswahlgruppe, für die der Quotient unter einem anderen Schwellenwert liegt, falls das Übertragungskapazitätsmaß des anderen Nutzers das nächsthöhere Übertragungskapazitätsmaß ist.

16. Verfahren zum Auswählen einer Untergruppe von Nutzern aus einer Mehrzahl von Nutzern für eine Übertragung in einem Mobilkommunikationssystem, wobei ein Nutzer angepasst ist zum Kommunizieren durch einen MIMO-Funkkanal, das folgende Schritte aufweist:

Auswählen (250) von Nutzern aus der Mehrzahl von Nutzern für eine Zwischenauswahlgruppe $S$ von Nutzern $k$ basierend auf einer räumlichen Kompatibilität der MI-MO-Funkkanäle der Nutzer der Mehrzahl von Nutzern, wobei die räumliche Kompatibilität einem kombinierten Übertragungskapazitätsmaß $C_{sum}(S)$ der Nutzer der Zwischenauswahlgruppe $S$ entspricht, **dadurch gekennzeichnet, dass** der Schritt des Auswählens Folgendes aufweist:

Bestimmen von Kanalenergiematrizen für die Nutzer von der Mehrzahl von Nutzern, und Akkumulieren der Kanalenergiematrizen für unterschiedliche Kombinationen von Nutzern, um eine akkumulierte Matrix für jede Kombination von Nutzern zu erhalten, wobei das Maß der räumlichen Kompatibilität für eine Kombination von Nutzern bereitgestellt wird basierend auf einer Determinante der akkumulierten Matrix für die Kombination von Nutzern; und **dadurch**, dass das Verfahren folgenden Schritt aufweist:

Bestimmen der Untergruppe von Nutzern für eine Übertragung von der Zwischenauswahlgruppe $S$ basierend auf den MIMO-Funkkanälen.

**17.** Das Verfahren gemäß Anspruch 16, das ferner einen Schritt des Abwählens (200) von Nutzern aus der Mehrzahl von Nutzern aufweist, um eine Vorauswahlgruppe zu erhalten, und wobei der Schritt des Auswählens (250) von Nutzern für die Zwischenauswahlgruppe auf der Vorauswahlgruppe basiert, wobei der Schritt des Abwählens (200) folgende Schritte aufweist:

Empfangen (205) einer vorbestimmten Größe der Vorauswahlgruppe;
Sortieren (210) der Mehrzahl von Nutzern gemäß den Frobenius-Normen oder Einzelnutzerraten ihrer MIMO-Funkkanalmatrizen, die ihre MIMO-Funkkanäle in absteigender Reihenfolge darstellen;
Aufnehmen (215) aller Nutzer in die Vorauswahlgruppe;
Vergleichen (220) der Frobenius-Norm oder Einzelnutzerrate des Nutzers mit der höchsten Frobenius-Norm oder der höchsten Einzelnutzerrate von der Vorauswahlgruppe mit der Frobenius-Norm oder Einzelnutzerrate des Nutzers mit der zweithöchsten Frobenius-Norm oder der zweithöchsten Einzelnutzerrate von der Vorauswahlgruppe;
Abwählen (225) des Nutzers mit der höchsten Frobenius-Norm oder der höchsten Einzelnutzerrate aus der Vorauswahlgruppe und Zurückkehren zu dem Schritt des Vergleichens (220), falls die höchste Frobenius-Norm oder die höchste Einzelnutzerrate höher ist als ein Faktor multipliziert mit der zweithöchsten Frobenius-Norm oder der zweithöchsten Einzelnutzerrate des Nutzers von der Vorauswahlgruppe; und
Abwählen (230) von Nutzern mit den niedrigsten Frobenius-Normen oder den niedrigsten Einzelnutzerraten aus der Vorauswahlgruppe, um mit der vorbestimmten Größe übereinzustimmen.

**18.** Das Verfahren gemäß Anspruch 17, bei dem der Schritt des Auswählens (250) folgende Schritte aufweist.
Empfangen (255) einer vorbestimmten Größe der Zwischenauswahlgruppe;
Auswählen (260) des Nutzers mit der höchsten Frobenius-Norm oder der höchsten Einzelnutzerrate aus der Vorauswahlgruppe;
Bewerten (265) einer Kapazität oder eines Summenratenanstiegs für nicht ausgewählte Nutzer in der Vorauswahlgruppe auf der Basis der ausgewählten Nutzer in der Zwischenauswahlgruppe;
Auswählen (270) des Nutzers mit der höchsten Kapazität oder dem höchsten Summenratenanstieg für die Zwischenauswahlgruppe; und
Zurückkehren zu dem Schritt des Bewertens (265), bis die Größe der Zwischenauswahlgruppe die vorbestimmte Größe der Zwischenauswahlgruppe erreicht hat.

**19.** Computerprogrammprodukt mit einem Programmcode zum Durchführen eines der Verfahren gemäß Anspruch 16 bis 18, wenn der Programmcode auf einem Prozessor läuft.

**Revendications**

**1.** Appareil de sélection d'utilisateurs (100) destiné à être opérationnel dans un système de communication mobile et à sélectionner un sous-groupe d'utilisateurs parmi une pluralité d'utilisateurs pour transmission, un utilisateur étant adapté pour communiquer via un canal radioélectrique à entrées multiples sorties multiples (MIMO = Multiple-Input-Multiple-Output), l'appareil de sélection d'utilisateur (100) comprenant:

un sélecteur (120) destiné à sélectionner les utilisateurs parmi la pluralité d'utilisateurs pour un groupe intermédiaire de sélection $S$ d'utilisateurs $k$ sur base d'une compatibilité spatiale des canaux radioélectriques MIMO des utilisateurs de la pluralité d'utilisateurs, où la compatibilité spatiale correspond à une mesure de capacité de transmission combinée $C_{sum}(S)$ des utilisateurs du groupe de sélection intermédiaire $S$, **caractérisé par le fait que** le sélecteur (120) est configuré

pour déterminer les matrices d'énergie de canal pour les utilisateurs parmi la pluralité d'utilisateurs, et
pour accumuler les matrices d'énergie de canal pour différentes combinaisons d'utilisateurs, pour obtenir une matrice accumulée pour chaque combinaison d'utilisateurs, où la mesure sur la compatibilité spatiale pour une combinaison d'utilisateurs est fournie sur base d'un déterminant de la matrice accumulée pour la combinaison d'utilisateurs; et **par le fait que** l'appareil comprend

un processeur (115) pour déterminer le sous-groupe d'utilisateurs pour transmission du groupe de sélection intermédiaire $S$ sur base des canaux radioélectriques MIMO.

**2.** Appareil de sélection d'utilisateurs (100) selon la revendication 1, dans lequel le sélecteur (120) est adapté pour sélectionner parmi la pluralité d'utilisateurs comprenant un premier utilisateur présentant un canal radioélectrique MIMO $H_1$, un deuxième utilisateur présentant un canal radioélectrique MIMO $H_2$ et un troisième utilisateur présentant un canal radioélectrique MIMO $H_3$, et pour évaluer une première mesure de capacité de transmission combinée $C_{sum}(S)_1$ sur base de $H_1$, d'une deuxième mesure de capacité de transmission combinée $C_{sum}(S)_2$ sur base de $H_2$, d'une troisième mesure de capacité de transmission combinée $C_{sum}(S)_3$ sur base de $H_3$, d'une quatrième mesure de capacité de transmission combinée $C_{sum}(S)_{12}$ sur base de $H_1$ et $H_2$, d'une cinquième mesure de capacité de transmission combinée $C_{sum}(S)_{13}$ sur base de $H_1$ et $H_3$, d'une sixième mesure de capacité de transmission combinée $C_{sum}(S)_{23}$ sur base de $H_2$ et $H_3$ et d'une septième mesure de capacité de transmission combinée $C_{sum}(S)_{123}$ sur base de $H_1$, $H_2$ et $H_3$, et pour sélectionner pour le groupe de sélection intermédiaire $S$ la combinaison d'utilisateurs à la mesure de capacité de transmission combinée la plus élevée.

3.  Appareil de sélection d'utilisateurs (100) selon la revendication 1 ou 2, dans lequel la mesure de capacité de transmission combinée d'une combinaison d'utilisateurs $k$ est sur la base d'un déterminant

$$\left| \sum_{k \in s} H_k^H H_k \right|.$$

4.  Appareil de sélection d'utilisateurs (100) selon l'une des revendications 1 à 3, dans lequel le sélecteur (120) est adapté pour évaluer une première mesure de capacité de transmission combinée d'un premier utilisateur du groupe de sélection intermédiaire et d'un deuxième utilisateur non sélectionné, et pour évaluer une deuxième mesure de capacité de transmission combinée du premier utilisateur du groupe de sélection intermédiaire et d'un troisième utilisateur non sélectionné, et pour sélectionner le deuxième utilisateur pour le groupe de sélection intermédiaire si la première mesure de capacité de transmission combinée est supérieure à la deuxième mesure de capacité de transmission combinée et pour sélectionner, sinon, le troisième utilisateur pour le groupe de sélection intermédiaire.

5.  Appareil de sélection d'utilisateurs (100) selon l'une des revendications 1 à 4, où le sélecteur (120) est adapté pour sélectionner pour le groupe de sélection intermédiaire une combinaison d'utilisateurs parmi la pluralité d'utilisateurs ayant pour résultat un groupe de sélection intermédiaire d'utilisateurs présentant une mesure de capacité de transmission combinée supérieure qu'un utilisateur à la mesure de capacité de transmission la plus élevée parmi la pluralité d'utilisateurs.

6.  Appareil de sélection d'utilisateurs (100) selon l'une des revendications 1 à 5, dans lequel le sélecteur (120) est adapté pour sélectionner, pour le groupe de sélection intermédiaire S, des utilisateurs parmi la pluralité d'utilisateurs $\hat{S}$ pour lesquels une mesure de capacité de transmission combinée en termes de capacité de somme $C_{sum}(S)$, selon

$$\lim_{P_{Tx} \to \infty} C_{sum}(S) = log_2 \left| I + \sum_{k \in s} H_k^H K_k \frac{P_{Tx}}{M_{Rx,k} N} \right|$$

*avec*

$$\sum_{k \in s} M_{Rx,k} \leq M_{Tx}$$

ou une capacité de somme estimée $C_{sum}(S)$ selon

$$\lim_{P_{Tx}\to\infty} C_{sum}(S) = log_2\left|I + \sum_{k\in s} H_k^H K_k \frac{P_{Tx}}{M_{Rx,k}N}\right|$$

avec

$$\sum_{k\in s} M_{Rx,k} > M_{Tx},$$

ou

$$C_{sum}(S) = log_2\left|I + \sum_{k\in s} H_k^H K_k \frac{P_{Tx}}{M_{Rx,k}N}\right| \; pour\; P_{Tx} < \infty,$$

est optimisée ou maximisée, où $M_{Rx,k}$ désigne le nombre d'antennes de réception d'un utilisateur $k$, $P_{Tx}$ est la puissance de transmission, $H_k$ représente la matrice de canal radioélectrique MIMO de l'utilisateur $k$, $I$ est une matrice d'identité, N représente la cardinalité de S et $M_{Tx}$ désigne un nombre d'antennes de transmission utilisées pour la transmission.

7. Appareil de sélection d'utilisateurs (100) selon l'une des revendications 1 à 6, dans lequel le sélecteur (120) est adapté pour
   sélectionner un utilisateur $\pi(1)$ pour le groupe de sélection intermédiaire $S$ ayant un canal radioélectrique MIMO représenté par la matrice de canal radioélectrique MIMO $H_{\pi(1)}$ ayant la norme de Frobenius la plus élevée des utilisateurs de la pluralité d'utilisateurs $S$ selon

$$\pi(i) = \arg\max_{k\in \acute{s}} \|H_k\|_F.$$

8. Appareil de sélection d'utilisateurs (100) selon la revendication 7, où le sélecteur (120) est adapté pour ajouter un utilisateur $\pi(i)$ parmi les utilisateurs non sélectionnés $k$ au groupe de sélection intermédiaire $S$ pour lequel l'augmentation de la capacité de somme ou de la capacité de somme estimée $OC_{sum}(S\cup k)$ est la plus forte, selon

$$\pi(i) = \arg\max_{k\in \acute{s}} \Delta C_{sum}(S\cup k),$$

tandis que

$$\Delta C_{sum}(S\cup k) = C_{sum}(S\cup k) - C_{sum}(S),$$

et la capacité de somme $C_{sum}(S)$ est déterminée selon

$$\lim_{P_{Tx} \to \infty} C_{sum}(S) = log_2 \left| I + \sum_{k \in s} H_k^H K_k \frac{P_{Tx}}{M_{Rx,k}N} \right|$$

*avec*

$$\sum_{k \in s} M_{Rx,k} \leq M_{Tx},$$

ou une capacité de somme estimée $C_{sum}(S)$ selon

$$\lim_{P_{Tx} \to \infty} C_{sum}(S) = log_2 \left| I + \sum_{k \in s} H_k^H K_k \frac{P_{Tx}}{M_{Rx,k}N} \right|$$

*avec*

$$\sum_{k \in s} M_{Rx,k} > M_{Tx},$$

ou

$$C_{sum}(S) = log_2 \left| I + \sum_{k \in s} H_k^H K_k \frac{P_{Tx}}{M_{Rx,k}N} \right| \ pour \ P_{Tx} < \infty,$$

où $M_{Rx,k}$ désigne le nombre d'antennes de réception de l'utilisateur $k$, $P_{Tx}$ est la puissance de transmission, $H_k$ représente la matrice du canal radioélectrique MIMO de l'utilisateur $k$, $I$ est une matrice d'identité, $N$ représente la cardinalité de $S$ et $M_{Tx}$ désigne le nombre d'antennes de transmission utilisées pour la transmission.

**9.** Appareil de sélection d'utilisateurs (100) selon l'une des revendications 1 à 8, où le processeur (115) est adapté pour traiter les canaux radioélectriques MIMO des utilisateurs du groupe intermédiaire d'utilisateurs pour obtenir des canaux radioélectriques MIMO traités et pour déterminer le sous-groupe d'utilisateurs pour transmission sur base d'une propriété spatiale des canaux radioélectriques MIMO traités des utilisateurs du groupe de sélection intermédiaire.

**10.** Appareil de sélection d'utilisateurs (100) selon la revendication 9, où le processeur (115) est adapté pour déterminer les utilisateurs du groupe de sélection intermédiaire pour le sous-groupe sur base de SESAM (SESAM = Successive Encoding Successive Allocation Method = Procédé de Codage Successif Attribution Successive).

**11.** Appareil de sélection d'utilisateurs (100) selon l'une des revendications 1 à 10, comprenant par ailleurs un présélecteur (110) destiné à désélectionner un utilisateur présentant une mesure de capacité de transmission qui est supérieure d'une quantité prédéterminée à une mesure de capacité de transmission d'un autre utilisateur, pour obtenir un groupe de présélection n'incluant pas l'utilisateur désélectionné, de sorte que le groupe de présélection comprenne deux utilisateurs présentant deux mesures de capacité de transmission qui sont égales ou différentes l'une de l'autre de moins de la quantité prédéterminée, et dans lequel le sélecteur (120) est adapté pour sélectionner les utilisateurs pour le groupe de sélection intermédiaire parmi le groupe de présélection.

**12.** Appareil de sélection d'utilisateurs (100) selon la revendication 11, où le présélecteur (110) est adapté pour déterminer la mesure de capacité de transmission en termes de débit de données le plus élevé pouvant être obtenu d'un sous-canal spatial d'utilisateur du canal radioélectrique MIMO et dans lequel la quantité prédéterminée est absolue ou relative.

**13.** Appareil de sélection d'utilisateurs (100) selon la revendication 11 ou 12, dans lequel le présélecteur (110) est adapté pour déterminer une mesure de capacité de transmission en évaluant une décomposition en valeurs singulières d'une matrice de canal radioélectrique MIMO d'utilisateur représentant le canal radioélectrique MIMO de l'utilisateur et dans lequel le présélecteur (110) est adapté pour déterminer la mesure de capacité de transmission en termes de valeur singulière la plus élevée d'une matrice de canal radioélectrique MIMO de l'utilisateur.

**14.** Appareil de sélection d'utilisateurs (100) selon l'une des revendications 11 à 13, dans lequel le présélecteur (110) est adapté pour déterminer la mesure de capacité de transmission en termes de norme de Frobenius d'une matrice de canal radioélectrique MIMO d'utilisateur représentant le canal radioélectrique MIMO de l'utilisateur.

**15.** Appareil de sélection d'utilisateurs (100) selon l'une des revendications 11 à 14, dans lequel le présélecteur (110) est adapté pour trier les utilisateurs selon les mesures de capacité de transmission et dans lequel le présélecteur (110) est adapté pour comparer une mesure de capacité de transmission d'utilisateur avec la mesure de capacité de transmission d'un autre utilisateur, l'autre utilisateur présentant la mesure de capacité de transmission immédiatement inférieure ou immédiatement supérieure parmi la pluralité d'utilisateurs, dans lequel le présélecteur (110) est par ailleurs adapté pour évaluer un quotient de la mesure de capacité de transmission de l'utilisateur et la mesure de capacité de transmission de l'autre utilisateur par rapport à des seuils prédéterminés et pour désélectionner l'utilisateur parmi le groupe de présélection pour lequel le quotient excède un seuil si la mesure de capacité de transmission de l'autre utilisateur est la mesure de capacité de transmission immédiatement inférieure ou pour désélectionner l'utilisateur parmi le groupe de présélection pour lequel le quotient est au-dessous d'un autre seuil si la mesure de capacité de transmission de l'autre utilisateur est la mesure de capacité de transmission immédiatement supérieure.

**16.** Procédé de sélection d'un sous-groupe d'utilisateurs parmi une pluralité d'utilisateurs pour transmission dans un système de communication mobile, un utilisateur étant adapté pour communiquer via un canal radioélectrique MIMO, comprenant les étapes consistant à:

sélectionner (250) des utilisateurs parmi la pluralité d'utilisateurs pour un groupe de sélection intermédiaire $S$ d'utilisateurs $k$ sur base d'une compatibilité spatiale des canaux radioélectriques MIMO des utilisateurs de la pluralité d'utilisateurs, où la compatibilité spatiale correspond à une mesure de capacité de transmission combinée $C_{sum}(S)$ des utilisateurs du groupe de sélection intermédiaire $S$, **caractérisé par le fait que** l'étape de sélection comprend:

déterminer les matrices d'énergie de canal pour les utilisateurs parmi la pluralité d'utilisateurs, et accumuler les matrices d'énergie de canal pour différentes combinaisons d'utilisateurs, pour obtenir une matrice accumulée pour chaque combinaison d'utilisateurs, où la mesure sur la compatibilité spatiale pour une combinaison d'utilisateurs est fournie sur base d'un déterminant de la matrice accumulée pour la combinaison d'utilisateurs; et

**par le fait que** le procédé comprend l'étape consistant à
déterminer le sous-groupe d'utilisateurs pour transmission du groupe de sélection intermédiaire $S$ sur base des canaux radioélectriques MIMO.

**17.** Procédé selon la revendication 16, comprenant par ailleurs une étape de désélection (200) d'utilisateurs parmi la pluralité d'utilisateurs, pour obtenir un groupe de présélection et dans lequel l'étape de sélection (250) d'utilisateurs pour le groupe de sélection intermédiaire est basée sur le groupe de présélection, dans lequel l'étape de désélection (200) comprend les étapes consistant à
recevoir (205) une grandeur prédéterminée du groupe de présélection;
trier (210) la pluralité d'utilisateurs selon les normes de Frobenius ou les taux d'utilisateur individuel de leurs matrices de canal radioélectrique MIMO représentant leurs canaux radioélectriques MIMO dans l'ordre décroissant;
inclure (215) tous les utilisateurs dans le groupe de présélection;
comparer (220) la norme de Frobenius ou le taux d'utilisateur individuel de l'utilisateur à la norme de Frobenius la plus élevée ou au taux d'utilisateur individuel le plus élevé parmi le groupe de présélection à la norme de Frobenius ou au taux d'utilisateur individuel de l'utilisateur présentant la deuxième norme de Frobenius la plus élevée ou le deuxième taux d'utilisateur individuel le plus élevé parmi le groupe de présélection;

désélectionner (225) l'utilisateur à la norme de Frobenius la plus élevée ou au taux d'utilisateur individuel le plus élevé parmi le groupe de présélection et retourner à l'étape de comparaison (220) si la norme de Frobenius la plus élevée ou le taux d'utilisateur individuel le plus élevé est supérieure à un facteur multiplié par la deuxième norme de Frobenius la plus élevée ou la deuxième d'utilisateur individuel la plus élevée de l'utilisateur parmi le groupe de présélection; et

désélectionner (230) les utilisateurs aux normes de Frobenius les plus basses ou aux s d'utilisateur individuel les plus basses parmi le groupe de présélection, pour coïncider avec la grandeur prédéterminée.

18. Procédé selon la revendication 17, dans lequel l'étape de sélection (250) comprend les étapes consistant à recevoir (255) une grandeur prédéterminée du groupe de sélection intermédiaire;

sélectionner (260) l'utilisateur présentant la norme de Frobenius la plus élevée ou la d'utilisateur individuel la plus élevée parmi le groupe de présélection;

évaluer (265) une augmentation de capacité ou de somme pour les utilisateurs non sélectionnés dans le groupe de présélection sur base des utilisateurs sélectionnés dans le groupe de sélection intermédiaire;

sélectionner (270) l'utilisateur à l'augmentation de capacité la plus élevée ou de de somme la plus élevée pour le groupe de sélection intermédiaire; et

retourner à l'étape d'évaluation (265) jusqu'à ce que la grandeur du groupe de sélection intermédiaire ait atteint la grandeur prédéterminée du groupe de sélection intermédiaire.

19. Produit programme d'ordinateur ayant un code de programme pour réaliser l'un des procédés selon les revendications 16 à 18 lorsque le code de programme est exécuté sur un processeur.

selector

plurality of
users →

intermediate
selection
group

processor

sub-group
for transmission →

120

115

100 ⟋

# FIG 1A

plurality of users

user 1, $H_1$
user 2, $H_2$
user 3, $H_3$

Selector

-user1, $H_1 \rightarrow C_{sum}(S)_1$
-user2, $H_2 \rightarrow C_{sum}(S)_2$
-user3, $H_3 \rightarrow C_{sum}(S)_3$

-user1, $H_1$
 user2, $H_2 \rightarrow C_{sum}(S)_{12}$

-user1, $H_1$
 user3, $H_3 \rightarrow C_{sum}(S)_{13}$

-user2, $H_2$
 user3, $H_3 \rightarrow C_{sum}(S)_{23}$

-user1, $H_1$
 user2, $H_2 \rightarrow C_{sum}(S)_{123}$
 user3, $H_3$

max

120

intermediate selection group

FIG 1B

(user 1, $H_1$, already selected)
user 2, $H_2$
user 3, $H_3$

plurality of users

Selector

-user1, $H_1$
 user2, $H_2$ → $C_{sum}(S)_{12}$

-user1, $H_1$
 user3, $H_3$ → $C_{sum}(S)_{13}$

max

120

intermediate selection
group

user1, $H_1$

FIG 1C

FIG 1D

plurality of users

de-selecting

200

(pre-selection group)

selecting

intermediate selection group

250

determining

sub-group for transmission

# FIG 2A

plurality of users

| receiving pre-determined size | ~205 |

↓

| sorting the plurality of users | ~210 |

↓

| including all users in pre-selection group | ~215 |

↓

220

$$\frac{\text{highest FN}}{\text{second highest FN}} > \alpha$$

YES → | deselecting user with highest FN from pre-selection group | ~225 |

NO

↓

| deselecting users with lowest FN to match pre-determined size | ~230 |

pre-selection group

↓

200

# FIG 2B

pre-selection group

↓

receiving pre-determined size of
intermediate selection group ⟋255

↓

selecting user with highest FN from
pre-selection group for
intermediate selection group ⟋260

↓

evaluating sum capacity increase
for non-selected users ⟋265

↓

selecting user with highest sum
capacity increase
for intermediate selection group ⟋270

↓

275

size of
intermediate selection
group <
pre-determined
size
?

YES ←

NO ↓

intermediate selection group

↓

250 ⟋

# FIG 2C

FIG 3A

FIG 3B

FIG 4A

FIG 4B

FIG 5A

FIG 5B

FIG 6A

FIG 6B

FIG 7

FIG 8

FIG 9

FIG 10

FIG 11 (State of the art)

FIG 12 (State of the art)

EP 2 134 003 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **W. Yu.** Sum-Capacity Computation for the Gaussian Vector Broadcast Channel. *IEEE Transactions on Information Theory,* 2006, vol. 52, 754-759
- **W. Yu ; W. Rhee ; S. Vishwanath ; S. Jafar ; A. Goldsmith.** Sum Power Iterative Waterfilling for Multi-antenna Gaussian Broadcast Channels. *IEEE Transactions on Information Theory,* 2005, vol. 51, 1570-1580
- **P. Tejera ; W. Utschick ; G. Bauch ; J. A. Nossek.** Subchannel Allocation in Multiuser Multiple Input Multiple Output Systems. *IEEE Transactions on Information Theory,* October 2006, vol. 52, 4721-4733
- **M.H.M. Costa.** Writing on Dirty Paper. *IEEE Transactions on Information Theory,* May 1983, vol. 29, 439-441
- **G. Aniba ; S. Aissa.** Multi-User Capacity Maximization for MIMO Gaussian Broadcast Channels. *Proc. of International Conference on Communications (ICC),* 2006
- **Q.H. Spencer ; A.L. Swindlehurst ; M. Haardt.** Zero-forcing Methods for Downlink Spatial Multiplexing in Multiuser MIMO Channels. *IEEE Trans. on Signal Processing,* February 2004, vol. 52 (2), 461-471
- **G. Caire ; S. Shamai.** On the Achievable Throughput of Multiantenna Gaussian Broadcast Channel. *IEEE Transactions on Information Theory,* July 2003, vol. 49 (7), 1691-1706
- **G. Dimic ; N.D. Sidoropoulos.** On Downlink Beamforming with Greedy User Selection. *IEEE Transactions on Signal Processing,* October 2005, vol. 53 (10), 3857-3868
- **J. Wang ; D.J. Love ; M. Zoltowski.** User Selection for the MIMO Broadcast Channel with a Fairness Constraint. *Proc. of IEEE International Conference on Acoustics, Speech, and Signal Processing (ICASSP),* 2007
- **T. Yoo ; A. Goldsmith.** On the Optimality of Multiantenna Broadcast Scheduling Using Zero-Forcing Beamforming. *IEEE Journal on Selected Areas in Communications,* March 2006, vol. 24 (3), 528-541
- **T. Yoo ; A. Goldsmith.** Sum-Rate Optimal Multi-Antenna Downlink Beamforming Strategy Based on Clique Search. *Proc. of Global Telecommunications Conference (GLOBECOM),* 2005

- **Z. Shen ; R. Chen ; J.G. Andrews ; R.W. Heath ; B.L. Evans.** Low Complexity User Selection Algorithms for Multiuser MIMO Systems with Block Diagonalization. *IEEE Transactions on Signal Processing,* September 2006, vol. 54 (9), 3658-3663
- **M. Fuchs ; G. Del Galdo ; M. Haardt.** Low-Complexity Space - Time - Frequency Scheduling for MIMO Systems With SDMA. *IEEE Transactions on Vehicular Technology,* September 2007, vol. 56, 2775-2784
- **Q.H. Spencer ; A.L. Swindlehurst.** Channel Allocation in Multi-user MIMO Wireless Communications Systems. *Proc. of International Conference on Communications (ICC),* 2004
- **T.F. Maciel ; A. Klein.** A Convex Quadratic SDMA Grouping Algorithm Based on Spatial Correlation. *Proc. of International Conference on Communications (ICC),* 2007
- **Z. Shen.** Low Complexity User Selection Algorithm for Multiuser MIMO Systems With Block Diagonalization. *IEEE Transactions on Signal Proessing,* September 2006, vol. 54 (9), 3658-3663
- **Z. Shen ; R. Chen ; J.G. Andrews ; R.W. Heath ; B.L. Evans.** Low Complexity User Selection Algorithms for Multiuser MIMO Systems with Block Diagonalization. *IEEE Transactions on Signal Processing,* September 2009, vol. 54 (9), 3658-3663
- **H. Viswanathan ; S. Venkatesan ; H. Huang.** Downlink Capacity Evaluation of Cellular Networks With Known-Interference Cancellation. *IEEE Journal on Selected Areas in Communications,* June 2006, vol. 21 (6), 802-811
- **M. Fuchs ; G. Del Galdo ; M. Haardt.** Low-Complexity Space -Time - Frequency Scheduling for MIMO Systems With SDMA. *IEEE Transactions on Vehicular Technology,* September 2007, vol. 56, 2775-2784
- **T.F. Maciel ; A. Klein.** A Low-Complexity SDMA Grouping Strategy for the Downlink of Multi-User MIMO Systems. *Proc. of IEEE International Symposium on Personal, Indoor and Mobile Radio Communications (PIMRC),* 2006
- **J. Lee ; N. Jindal.** High SNR Analysis for MIMO Broadcast Channels, Dirty Paper Coding Versus Linear Precoding. *IEEE Transaction on Information Theory,* 2007, vol. 53, 4787-4792

47

- **J. Lee ; N. Jindal.** High SNR Analysis for MIMO Broadcast Channels, Dirty Paper Coding Versus Linear Precoding. *IEEE Transaction on Information Theory,* 2007, vol. 53, 4787-4792

- **H. Viswanathan ; S. Venkatesan ; H. Huang.** Downlink Capacity Evaluation of Cellular Networks With Known-Interference Cancellation. *IEEE Journal on Selected Areas in Communications,* June 2003, vol. 21 (6), 802-811